# EUROPEAN PATENT SPECIFICATION

(11) **EP 3 582 379 B1**
(45) Date of publication and mention of the grant of the patent: **09.03.2022**
(21) Application number: 18177841.6
(22) Date of filing: 14.06.2018
(51) Int. Cl.: H02J 3/36, H02M 1/15, H02J 3/01, H02M 1/14, H02M 1/32, H02M 7/483

(54) **VOLTAGE SOURCE CONVERTER**
SPANNUNGSQUELLENUMRICHTER
CONVERTISSEUR DE SOURCE DE TENSION

(43) Date of publication of application: 18.12.2019
(73) Proprietor: General Electric Technology GmbH, 5400 Baden (CH)
(72) Inventor: CLARE, Jonathan Charles, Keyworth, nottinghamshire NG12 5EG (GB); TRAINER, David Reginald, Stafford, Staffordshire ST16 1WS (GB); COSTABEBER, Alessandro, Nottingham, NG2 2LE (GB)
(74) Representative: Brevalex

(56) References cited:
- WO-A1-2004/082115
- WO-A1-2013/135300
- WO-A1-2014/082661
- WO-A1-2016/037666
- CN-A- 105 656 336
- Anonymous: "Rectifier - Wikipedia", , 27 May 2018 (2018-05-27), XP055711060, Retrieved from the Internet: URL:https://en.wikipedia.org/w/index.php?t itle=Rectifier&oldid=843186607 [retrieved on 2020-07-02]

## Description

This invention relates to a voltage source converter, preferably for use in high voltage direct current (HVDC) power transmission and reactive power compensation.

In HVDC power transmission networks alternating current (AC) power is typically converted to direct current (DC) power for transmission via overhead lines, under-sea cables and/or underground cables. This conversion removes the need to compensate for the AC capacitive load effects imposed by the power transmission medium, i.e. the transmission line or cable, and reduces the cost per kilometre of the lines and/or cables, and thus becomes cost-effective when power needs to be transmitted over a long distance.

The conversion between DC power and AC power is utilized in power transmission networks where it is necessary to interconnect the DC and AC networks. In any such power transmission network, converters are required at each interface between AC and DC power to effect the required conversion from AC to DC or from DC to AC.

Such converters are known from documents : WO2014/082661, WO2016/037666, WO2004/082115, WO2013/135300 and CN10565 336.

According to a first aspect of the invention, there is provided a voltage source converter comprising first and second DC terminals for connection to a DC network, the voltage source converter further comprising an AC phase terminal for connection to a phase of an AC network, the voltage source converter including a limb connected between the first and second DC terminals, the limb including first and second sub-limbs connected between the first and second DC terminals, each sub-limb including a phase element, each phase element including a plurality of switching elements and at least one AC terminal, the or each AC terminal of each phase element operably connected to the AC phase terminal, the plurality of switching elements of each phase element configured to be switchable to selectively interconnect a DC side voltage at a DC side of the phase element and an AC side voltage at an AC side of the phase element, each sub-limb further including at least one energy storage device connected at the DC side of the phase element, wherein the voltage source converter further includes a controller programmed to control the switching of the switching elements of the phase elements so as to control each phase element to switch between: a first operating mode to control the configuration of an AC voltage waveform at the or each corresponding AC terminal to have a positive phase shift relative to an AC voltage waveform at the AC phase terminal; and a second operating mode to control the configuration of an AC voltage waveform at the or each corresponding AC terminal to have a negative phase shift relative to the AC voltage waveform at the AC phase terminal.

The provision of the independently controllable first and second sub-limbs in the limb of the voltage source converter of the invention enables the first and second sub-limbs to be operated with a phase difference therebetween so as to control the configuration of a resultant AC voltage waveform at the common AC phase terminal and at the same time reduce the amount of ripple in a DC voltage presented by the limb to the DC terminals.

For each phase element, the magnitudes of the phase shifts of the first and second operating modes can be equal or different. The magnitude of the positive phase shift of the first operating mode of one phase element may be equal to, or different from, the magnitude of the positive phase shift of the first operating mode of the other phase element. The magnitude of the negative phase shift of the second operating mode of one phase element may be equal to, or different from, the magnitude of the negative phase shift of the second operating mode of the other phase element.

In order to operate the voltage source converter over a wide real power-reactive power (P-Q) envelope, the voltage source converter is required to be capable of exchanging both leading and lagging reactive power with the AC network. However, when the sub-limbs are operated with a phase difference therebetween while the limb exchanges reactive power with the AC network, one sub-limb operates with real power of one polarity while the other sub-limb operates with real power of the opposite polarity. This in turn would result in the energy level of one sub-limb experiencing a net increase caused by the charging of the or each corresponding energy storage device, and the energy level of the other sub-limb experiencing a net decrease caused by the discharging of the or each corresponding energy storage device.

Such energy accumulation in, or energy loss from, from the or each energy storage device of each sub-limb could result in undesirable deviation of the energy level of at least one energy storage device from a reference value, which could impact on the ability of the voltage source converter to reliably exchange reactive power with the AC network. This is because, if too little energy is stored within a given energy storage device then the voltage the energy storage device is able to generate is reduced, whereas if too much energy is stored in a given energy storage device then over-voltage problems may arise. The former would require the addition of a power source to restore the energy level of the affected energy storage device to the reference value, while the latter would require an increase in voltage rating of one or more energy storage devices to prevent the over-voltage problems, thus adding to the overall size, weight and cost of the voltage source converter. In addition if too little energy is stored within a given energy storage device then the voltage source converter might trip due to under-voltage protection. It is therefore desirable to regulate the energy stored in the energy storage devices of the sub-limbs, thereby obviating the problems associated with a deviation of the energy level of at least one energy storage device from the reference value.

By enabling the control of each phase element to switch between the first and second operating modes, each sub-limb is controlled to switch between operating with real power of one polarity and operating with real power of the opposite polarity. This enables the controlled charging and discharging of the or each energy storage device of each sub-limb, which can be used to regulate the energy level of the or each energy storage device of each sub-limb to a desired reference value. As a result, the aforementioned deviation of the energy level of at least one energy storage device from a reference value can be avoided, which allows the voltage source converter of the invention to reliably exchange reactive power with the AC network.

In a preferred embodiment of the invention, the controller is programmed to control the switching of the switching elements of the phase elements so that, in use, while each phase element is controlled to switch between the first and second operating modes, one of the phase elements is controlled to be in one of the first and second operating modes while the other of the phase elements is controlled to be in the other of the first and second operating modes. This provides real-time regulation of the or each energy storage device of each sub-limb during the operation of the sub-limbs with a phase difference therebetween so as to control the configuration of a resultant AC voltage waveform at the common AC phase terminal.

Optionally the controller may be programmed to control the switching of the switching elements of the phase elements so as to control each phase element to switch between the first and second operating modes so that, in use, a net change in energy stored in the or each energy storage device of each sub-limb is controlled to be zero or substantially zero. The zero or substantially zero net change in energy stored in the or each energy storage device of each sub-limb may be obtained over any predefined period of time, e.g. a power frequency cycle of the AC voltage waveform at the AC phase terminal.

In embodiments of the invention, the controller may be programmed to control the switching of the switching elements of the phase elements so as to control each phase element to switch between the first and second operating modes a single time or several times over a power frequency cycle of the AC voltage waveform at the AC phase terminal. The number of times required to switch each phase element between the first and second operating modes depends on the energy level regulation requirements of the or each energy storage device of each limb.

In further embodiments of the invention, the controller may be programmed to control the switching of the switching elements of the phase elements so as to control each phase element to switch between the first and second operating modes at a zero-crossing point of the AC voltage waveform at the AC phase terminal.

During an AC fault in the AC network resulting in an AC voltage depression, a voltage source converter is expected to respond with reactive power (e.g. capacitive reactive power) to support the AC network and help with AC voltage restoration.

In still further embodiments of the invention, the controller may be programmed to control the switching of the switching elements of the phase elements so as to control each phase element to switch between the first and second operating modes in response to an AC fault in the AC network. The aforementioned ability of the invention to regulate the energy level of the or each energy storage device of each sub-limb to a desired reference value enables the voltage source converter of the invention to reliably exchange reactive power with the AC network during the occurrence of the AC fault.

According to a second aspect of the invention, there is provided a voltage source converter comprising first and second DC terminals for connection to a DC network, the voltage source converter further comprising an AC phase terminal for connection to a phase of an AC network, the voltage source converter including first and second limbs connected between the first and second DC terminals, each limb including at least one phase element, each phase element including a plurality of switching elements and at least one AC terminal, the plurality of switching elements of each phase element configured to be switchable to selectively interconnect a DC side voltage at a DC side of the phase element and an AC side voltage at an AC side of the phase element, each limb further including a first sub-converter connected at the DC side of the or each phase element, each first sub-converter configured to be controllable to act as a waveform synthesizer to modify a first DC voltage presented to the DC network, each first sub-converter including at least one energy storage device, wherein the voltage source converter further includes first and second transformer assemblies, the first transformer assembly arranged to operably connect the or each AC terminal of the or each phase element of the first limb to the AC phase terminal, the second transformer assembly arranged to operably connect the or each AC terminal of the or each phase element of the second limb to the AC phase terminal, the first and second transformer assemblies configured so that, in use, an AC voltage waveform at the or each AC terminal of the or each phase element of the first limb is phase shifted relative to an AC voltage waveform at the or each AC terminal of the or each phase element of the second limb.

The configurations of the first and second transformer assemblies in the voltage source converter of the invention enables the provision of a phase shift between the respective AC voltage waveforms at the AC terminals of the phase elements of the first and second limbs so as to control the configuration of a resultant AC voltage waveform at the common AC phase terminal and at the same time reduce the amount of ripple in a DC voltage presented by the limbs to the DC terminals.

According to a third aspect of the invention, there is provided a voltage source converter comprising first and second DC terminals for connection to a DC network, the voltage source converter further comprising an AC phase terminal for connection to a phase of an AC network, the voltage source converter including first and second limbs connected between the first and second DC terminals, each limb including first and second sub-limbs connected between the first and second DC terminals, each sub-limb including a phase element, each phase element including a plurality of switching elements and at least one AC terminal, the plurality of switching elements of each phase element configured to be switchable to selectively interconnect a DC side voltage at a DC side of the phase element and an AC side voltage at an AC side of the phase element, each sub-limb further including at least one energy storage device connected at the DC side of the phase element, wherein the voltage source converter further includes first and second transformer assemblies, the first transformer assembly arranged to operably connect the or each AC terminal of each phase element of the first limb to the AC phase terminal, the second transformer assembly arranged to operably connect the or each AC terminal of each phase element of the second limb to the AC phase terminal, the first and second transformer assemblies configured so that, in use, an AC voltage waveform at the or each AC terminal of each phase element of the first limb is phase shifted relative to an AC voltage waveform at the or each AC terminal of each phase element of the second limb, wherein the voltage source converter further includes a controller programmed to control the switching of the switching elements of the phase elements so as to control each phase element to control the configuration of an AC voltage waveform at the or each corresponding AC terminal so that, in use, an AC voltage waveform at the or each AC terminal of the phase element of each first sub-limb has a positive phase shift relative to the AC voltage waveform at the AC phase terminal, and an AC voltage waveform at the or each AC terminal of the phase element of each second sub-limb has a negative phase shift relative to the AC voltage waveform at the AC phase terminal.

The provision of the independently controllable first and second sub-limbs in each limb of the voltage source converter of the invention enables the first and second sub-limbs to be operated with a phase difference therebetween so as to control the configuration of a resultant AC voltage waveform at the common AC phase terminal and at the same time reduce the amount of ripple in a DC voltage presented by the limbs to the DC terminals. Furthermore, the ability to operate the first and second sub-limbs with a phase difference therebetween in combination with the configurations of the first and second transformer assemblies provides a reliable means of designing and assembling higher pulse voltage source converters, thus enabling further reductions in the amount of ripple in the DC voltage presented by the limbs to the DC terminals.

The magnitude of each positive phase shift can be equal to, or different from, the magnitude of each negative phase shift. The magnitude of the positive phase shift of the first sub-limb of the first limb can be equal to, or different from, the magnitude of the positive phase shift of the first sub-limb of the second limb. The magnitude of the negative phase shift of the second sub-limb of the first limb can be equal to, or different from, the magnitude of the negative phase shift of the second sub-limb of the second limb.

In further embodiments of the third aspect of the invention, the controller may be programmed to control the switching of the switching elements of the phase elements so as to control each phase element to switch between: a first operating mode to control the configuration of the AC voltage waveform at the or each corresponding AC terminal to have a positive phase shift relative to the AC voltage waveform at the AC phase terminal; and a second operating mode to control the configuration of the AC voltage waveform at the or each corresponding AC terminal to have a negative phase shift relative to the AC voltage waveform at the AC phase terminal. The aforementioned features and advantages of the first aspect of the invention and its embodiments apply mutatis mutandis to such further embodiments of the third aspect of the invention.

It will be appreciated that the or each limb, and its components, of each aspect of the invention may be configured in different ways to vary the topology of the voltage source converter, non-limiting examples of which are described as follows.

The manner in which each sub-limb is connected between the first and second DC terminals may vary. For example, the sub-limbs may be connected in series between the first and second DC terminals.

The or each limb may include at least one additional sub-limb. In other words, the or each limb may include two, three, four, five or more sub-limbs in total.

The plurality of switching elements in each phase element may include two parallel-connected pairs of series-connected switching elements, a junction between each pair of series-connected switching elements defining an AC terminal that is operably connected to the AC phase terminal.

In embodiments employing the use of sub-limbs, each sub-limb may include a first sub-converter configured to be controllable to act as a waveform synthesizer to modify a first DC voltage presented to the DC network, the first sub-converter of each sub-limb including at least one energy storage device.

Each limb or sub-limb may include a second sub-converter connected with the phase element in an electrical block, the first sub-converter connected in parallel with the electrical block, the second sub-converter configured to be controllable to act as a waveform synthesizer to modify a second DC voltage presented to the DC side of the phase element, the second sub-converter including at least one energy storage device.

Alternatively, the or each energy storage device connected at the DC side of each phase element may be connected in series between the first and second DC terminals.

Each sub-converter may include at least one module, the or each module including at least one switching element and at least one energy storage device, the or each switching element and the or each energy storage device in the or each module arranged to be combinable to selectively provide a voltage source.

The inclusion of the or each module in each sub-converter provides each sub-converter with a reliable means of acting as a waveform synthesizer.

The or each module in each sub-converter may vary in configuration.

In a first exemplary configuration of a sub-converter module, the or each switching element and the or each energy storage device in the module may be arranged to be combinable to selectively provide a unidirectional voltage source. For example, the module may include a pair of switching elements connected in parallel with an energy storage device in a half-bridge arrangement to define a 2-quadrant unipolar module that can provide zero or positive voltage and can conduct current in two directions.

In a second exemplary configuration of a sub-converter module, the or each switching element and the or each energy storage device in the module may be arranged to be combinable to selectively provide a bidirectional voltage source. For example, the module may include two pairs of switching elements connected in parallel with an energy storage device in a full-bridge arrangement to define a 4-quadrant bipolar module that can provide negative, zero or positive voltage and can conduct current in two directions.

In embodiments of the invention, each sub-converter may be a multilevel converter.

More specifically, each sub-converter may include a plurality of series-connected modules that defines a chain-link converter. The structure of the chain-link converter permits build-up of a combined voltage across the chain-link converter, which is higher than the voltage available from each of its individual modules, via the insertion of the energy storage devices of multiple modules, each providing its own voltage, into the chain-link converter. In this manner switching of the or each switching element in each module causes the chain-link converter to provide a stepped variable voltage source, which permits the generation of a voltage waveform across the chain-link converter using a step-wise approximation. As such the chain-link converter is capable of providing a wide range of complex voltage waveforms.

At least one switching element may include at least one self-commutated switching device. The or each self-commutated switching device may be an insulated gate bipolar transistor, a gate turn-off thyristor, a field effect transistor, an injection-enhanced gate transistor, an integrated gate commutated thyristor or any other self-commutated switching device. The number of switching devices in each switching element may vary depending on the required voltage and current ratings of that switching element.

At least one switching element may further include a passive current check element that is connected in anti-parallel with the or each switching device. The or each passive current check element may include at least one passive current check device. The or each passive current check device may be any device that is capable of limiting current flow in only one direction, e.g. a diode. The number of passive current check devices in each passive current check element may vary depending on the required voltage and current ratings of that passive current check element.

Each energy storage device may be any device that is capable of storing and releasing energy to selectively provide a voltage, e.g. a capacitor, fuel cell or battery.

In a preferred embodiment of the invention, the voltage source converter includes a plurality of AC phase terminals, each AC phase terminal connectable to a respective phase of a multi-phase AC network, and the voltage source converter includes a plurality of limbs connected between the first and second DC terminals, the or each AC terminal of the or each phase element of each limb operably connected to a respective one of the AC phase terminals.

In embodiments of the invention employing a plurality of limbs, the limbs may be connected in series between the first and second DC terminals.

It will be appreciated that the voltage source converter may include a different number of a plurality of limbs, each of which is connectable to a respective phase of a multi-phase AC network with the corresponding number of phases, or may include a single limb connectable to a single-phase AC network.

It will be also appreciated that the use of the terms "first" and "second", and the like, in this patent specification is merely intended to help distinguish between similar features (e.g. the first and second sub-limbs; the first and second sub-converters, the first and second limbs), and is not intended to indicate the relative importance of one feature over another feature, unless otherwise specified.

It will be further appreciated that at least one embodiment of each aspect of the invention may be combined with one of more embodiments of the other aspects of the invention.

It will be understood that the terms "operably connect" and "operably connected" is intended to cover both direct connections and indirect connections. An example of an indirect connection is, but is not limited to, mutually coupled transformer windings.

Preferred embodiments of the invention will now be described, by way of non-limiting examples, with reference to the accompanying drawings in which:
Figure 1 shows schematically a voltage source converter according to a first embodiment of the invention;
Figure 2 shows schematically a structure of each limb of the voltage source converter of Figure 1;
Figure 3 shows schematically a structure of each module of a first sub-converter of the voltage source converter of Figure 1;
Figure 4 shows schematically a conventional voltage source converter;
Figures 5 to 10 illustrate an exemplary operation of the voltage source converter of Figure 1;
Figure 11 shows schematically a voltage source converter according to a second embodiment of the invention;
Figure 12 shows schematically a structure of each limb of the voltage source converter of Figure 11;
Figure 13 shows schematically a structure of each module of a second sub-converter of the voltage source converter of Figure 11;
Figures 14 to 16 illustrate an exemplary operation of the voltage source converter of Figure 11;
Figure 17 shows schematically a voltage source converter according to a third embodiment of the invention;
Figure 18 shows schematically a voltage source converter according to a fourth embodiment of the invention; and
Figure 19 illustrate an exemplary operation of the voltage source converter of Figure 18.

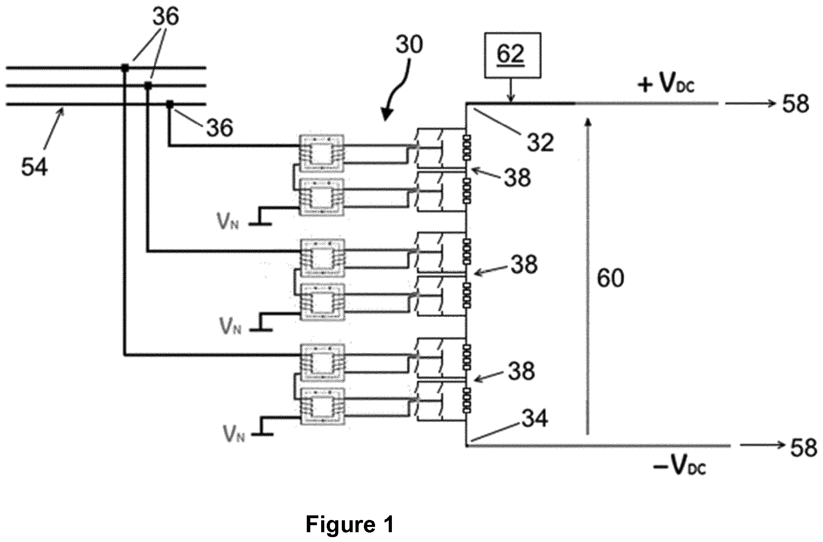

A voltage source converter according to a first embodiment of the invention is shown in Figure 1 and is designated generally by the reference numeral 30.

The voltage source converter 30 comprises first and second DC terminals 32,34, a plurality of AC phase terminals 36, and a plurality of limbs 38.

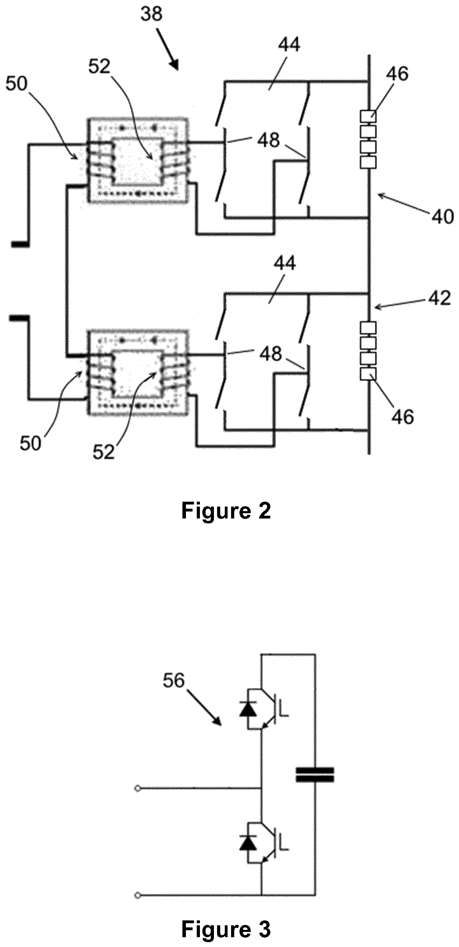

Figure 2 shows the structure of each limb 38. Each limb 38 includes first and second sub-limbs 40,42. Each sub-limb 40,42 includes a phase element 44 and a first sub-converter 46. In each sub-limb 40,42, the first sub-converter 46 is connected in parallel with the phase element 44.

Each phase element 44 includes two parallel-connected pairs of series-connected switching elements. A junction between each pair of series-connected switching elements defines an AC terminal 48. The AC terminals 48 of each phase element 44 define the AC side of that phase element.

For each limb 38, the AC terminals 48 of the phase elements 44 of the first and second sub-limbs 40,42 are connected via a transformer assembly to a respective one of the AC phase terminals 36. The AC terminals 48 of the phase element 44 of the first sub-limb 40 are connected to the AC phase terminal 36 via primary and secondary transformer windings 50,52 of a first transformer, where the AC terminals 48 of the phase element 44 of the first sub-limb 40 are connected to respective ends of the secondary transformer winding 52, the secondary transformer winding 52 is mutually coupled with the primary transformer winding 50, and the primary transformer winding 50 is connected to the AC phase terminal 36. The AC terminals 48 of the phase element 44 of the second sub-limb 42 are connected to the AC phase terminal 36 via primary and secondary transformer windings 50,52 of a second transformer, where the AC terminals 48 of the phase element 44 of the second sub-limb 42 are connected to respective ends of the secondary transformer winding 52, the secondary transformer winding 52 is mutually coupled with the primary transformer winding 50, and the primary transformer winding 50 is connected to the AC phase terminal 36. The primary transformer windings 50 of the first and second transformers are connected in series between the AC phase terminal 36 and ground.

Each AC phase terminal 36 is connected to a respective phase of a three-phase AC network 54.

In this manner, the AC sides of the phase elements 44 of the sub-limbs 40,42 of each limb 38 is connected to a common AC phase terminal 36 which, in use, is connected to a respective phase of a three-phase AC network 54.

Each first sub-converter includes a plurality of modules 56. Each module 56 includes a pair of switching elements and an energy storage device in the form of a capacitor. In each module 56 of each first sub-converter 46, the pair of switching elements is connected in parallel with the capacitor in a half-bridge arrangement to define a 2-quadrant unipolar module that can provide zero or positive voltage and can conduct current in two directions, as shown in Figure 3.

The limbs 38 are connected in series between the first and second DC terminals 32,34, and the sub-limbs 40,42 in each limb 38 are connected in series between the first and second DC terminals 32,34. In use, the first and second DC terminals 32,35 are respectively connected to first and second terminals of a DC network 58, the first terminal of the DC network 58 carrying a positive DC voltage +V_{DC}, the second terminal of the DC network 58 carrying a negative DC voltage -V_{DC}. Thus, the series-connected limbs 38, and the series-connected sub-limbs 40,42, act to support a summed DC voltage 60 across the first and second DC terminals 32,34.

The configuration of each limb 38 as set out above means that, in use, a DC voltage appears across the parallel-connected pairs of series-connected switching elements of each phase element 44.

In use, the plurality of switching elements of each phase element 44 is switchable to interconnect a DC side voltage at a DC side of the phase element 44 and an AC side voltage at an AC side of the phase element 44. In other embodiments, it is envisaged that each phase element may include a plurality of switching elements with a different configuration to interconnect a DC voltage and an AC voltage.

Each switching element includes a single switching device. Each switching element further includes a passive current check element that is connected in anti-parallel with each switching device.

Each switching device is in the form of an insulated gate bipolar transistor (IGBT). It is envisaged that, in other embodiments of the invention, each IGBT may be replaced by a gate turn-off thyristor, a field effect transistor, an injection-enhanced gate transistor, an integrated gate commutated thyristor or any other self-commutated switching device. The number of switching devices in each switching element may vary depending on the required voltage rating of that switching element.

Each passive current check element includes a passive current check device in the form of a diode. It is envisaged that, in other embodiments, each diode may be replaced by any other device that is capable of limiting current flow in only one direction. The number of passive current check devices in each passive current check element may vary depending on the required voltage rating of that passive current check element.

It is further envisaged that, in other embodiments of the invention, each capacitor may be replaced by another type of energy storage device that is capable of storing and releasing energy to selectively provide a voltage, e.g. a fuel cell or battery.

The plurality of series-connected modules 56 in each sub-converter defines a chain-link converter.

The capacitor of each module 56 is selectively bypassed or inserted into the chain-link converter by changing the states of the switching elements. This selectively directs current through the capacitor or causes current to bypass the capacitor so that the module 56 provides a zero or positive voltage in the case of each first sub-converter.

The capacitor of the module 56 is bypassed when the switching elements in the module 56 are configured to form a short circuit in the module 56. This causes current in the chain-link converter to pass through the short circuit and bypass the capacitor, and so the module 56 provides a zero voltage, i.e. the module 56 is configured in a bypassed mode.

The capacitor of the module 56 is inserted into the chain-link converter when the switching elements in the module 56 are configured to allow the current in the chain-link converter to flow into and out of the capacitor. The capacitor then charges or discharges its stored energy so as to provide a positive voltage, i.e. the module 56 is configured in a non-bypassed mode.

It is envisaged that, in other embodiments of the invention, each module may be replaced by another type of module that includes at least one switching element and at least one energy storage device, the or each switching element and the or each energy storage device in the or each module arranged to be combinable to selectively provide a voltage source.

The structure of the chain-link converter permits build-up of a combined voltage across the chain-link converter, which is higher than the voltage available from each of its individual modules 56, via the insertion of the energy storage devices of multiple modules 56, each providing its own voltage, into the chain-link converter. In this manner switching of each switching element in each module 56 causes the chain-link converter to provide a stepped variable voltage source, which permits the generation of a voltage waveform across the chain-link converter using a step-wise approximation. As such each chain-link converter is capable of providing a wide range of complex voltage waveforms.

The parallel connection of the first sub-converter 46 and phase element 44 in each sub-limb 40,42 permits the first sub-converter 46 to selectively act as a waveform synthesizer to modify a first DC voltage that is presented to the DC network 58.

It is envisaged that, in other embodiments of the invention, the configuration of each first sub-converter may vary as long as each first sub-converter is capable of selectively acting as a waveform synthesizer to modify the respective first DC voltage.

The voltage source converter 30 further includes a controller 62 programmed to control the phase elements 44 and the first sub-converters 46.

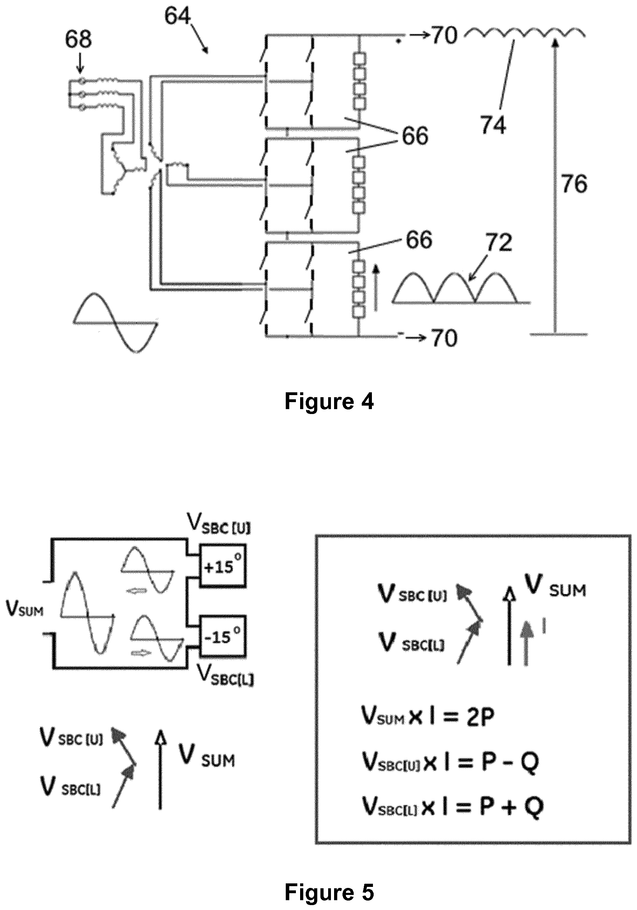

Operation of the voltage source converter is described as follows, with reference to Figures 4 to 10.

Where applicable, the following operation of the voltage source converter 30 has been described with reference to one of the phases, and it will be understood that such description applies mutatis mutandis to the other two phases unless specified otherwise.

Figure 4 shows schematically a conventional voltage source converter 64. The conventional voltage source converter 64 is similar in structure to the voltage source converter 30 of Figure 1 except that each limb 66 includes a single phase element and a single first sub-converter, and the AC terminals of each phase element is connected to a respective phase of a three-phase AC network 68 via a star-star-connected transformer assembly. The configuration of the conventional voltage source converter 64 permits its operation to facilitate a power transfer between the AC and DC networks 68,70 through the switching of the phase elements and through the operation of the first sub-converters to modify the respective first DC voltages. However, in such a power transfer, each first DC voltage 72 includes undesirable ripple components in the form of one or more even harmonics of the AC supply frequency, which in turn results in the presence of ripple 74 in the form of the 6^{th} harmonic and/or multiples thereof (12^{th}, 18^{th}, and so on) in the summed DC voltage 76 presented to the DC network 70.

In contrast, when the voltage source converter 30 of Figure 1 is operated to facilitate a power transfer between the AC and DC networks 54,58, it can be operated to reduce the amount of ripple in the summed DC voltage 60 presented to the DC network 58 when compared to the conventional voltage source converter 64, as follows.

For each limb 38, due to the configuration of the first and second sub-limbs 40,42, the AC voltage waveform at the AC phase terminal 36 is the vector sum of the AC voltage waveforms at the AC terminals 48 of the phase elements 44 of the first and second sub-limbs 40,42. For convenience, the AC voltage waveform at the AC phase terminal 36 is referred to as the resultant AC voltage waveform V_{SUM}, the AC voltage waveform at the AC terminals 48 of the phase element 44 of the first sub-limb 40 is referred to as the first AC voltage waveform V_{SBC(U)}, and the AC voltage waveform at the AC terminals 48 of the phase element 44 of the second sub-limb 42 is referred to as the second AC voltage waveform V_{SBC(L)}.

Also, due to the configuration of the first and second sub-limbs 40,42, the first and second sub-limbs 40,42 are independently controllable of each other.

The amount of ripple in the summed DC voltage 60 presented to the DC network 58 is reduced by switching the switching elements of the phase elements 44 of the sub-limbs 40,42 so as to control the phase element 44 of each first sub-limb 40 to be in a first operating mode and control the phase element 44 of each second sub-limb 42 to be in a second operating mode. In the first operating mode, the phase element 44 is operated to control the configuration of the first AC voltage waveform V_{SBC(U)} to have a phase shift of +15 electrical degrees relative to the resultant AC voltage waveform V_{SUM}. In the second operating mode, the phase element 44 is operated to control the configuration of the second AC voltage waveform V_{SBC(L)} to have a phase shift of -15 electrical degrees relative to the resultant AC voltage waveform V_{SUM}. As a result, for each limb, the resultant AC voltage waveform V_{SUM} is the vector sum of the first and second AC voltage waveforms V_{SBC(U)},V_{SBC(L)} with a phase angle of zero electrical degrees. The first and second AC voltage waveforms V_{SBC(U)},V_{SBC(L)} are controlled to be equal in magnitude.

The limbs 38 are controlled to provide the resultant AC voltage waveforms V_{SUM} with a phase shift of 120 electrical degrees relative to each other so as to be compatible with the three-phase AC network 54.

When real power flows in each limb 38, a limb current I also flows through each sub-limb 40,42. The limb current I is in phase with the resultant AC voltage waveform V_{SUM}. Consequently, the first AC voltage waveform V_{SBC(U)} has a phase shift of +15 electrical degrees relative to the limb current I, and the second AC voltage waveform V_{SBC(L)} has a phase shift of -15 electrical degrees relative to the limb current I. This means that the first sub-limb 40 with the phase element 44 in the first operating mode is operating with lagging reactive power, the second sub-limb 42 with the phase element 44 in the second operating mode is operating with leading reactive power, and the lagging and leading reactive powers respectively circulate within the first and second sub-limbs 40,42, as illustrated in Figure 5. The lagging and leading reactive powers effectively cancel at the AC phase terminal 36 due to: the equal magnitudes of the first and second AC voltage waveforms V_{SBC(U)},V_{SBC(L)}; and the equal phase shifts of the first and second AC voltage waveforms V_{SBC(U)},V_{SBC(L)} relative to the resultant AC voltage waveform VsUM.

Each sub-limb 40,42 transfers the same amount of real power due to: the series connection of the sub-limbs 40,42 between the first and second DC terminals 32,34; equal magnitudes of the DC side average voltages of the phase elements 44 of the sub-limbs 32,34; and a common direct current flowing through the sub-limbs 40,42.

The lagging and leading reactive powers use part of the available rating of the voltage source converter 30. Assuming a current of 1000A flowing into the AC phase terminal 36, the +15 and -15 electrical degrees phase shifts of the first and second AC voltage waveforms V_{SBC(U)},V_{SBC(L)} means that 966A of the current rating is used for real power transfer and the remaining portion of the current rating is used up by the lagging and leading reactive powers, which is acceptable considering the beneficial reduction in the amount of ripple in the summed DC voltage 60 presented to the DC network 47 resulting from the phase elements 44 of the first and second sub-limbs 40,42 being in the first and second operating modes respectively.

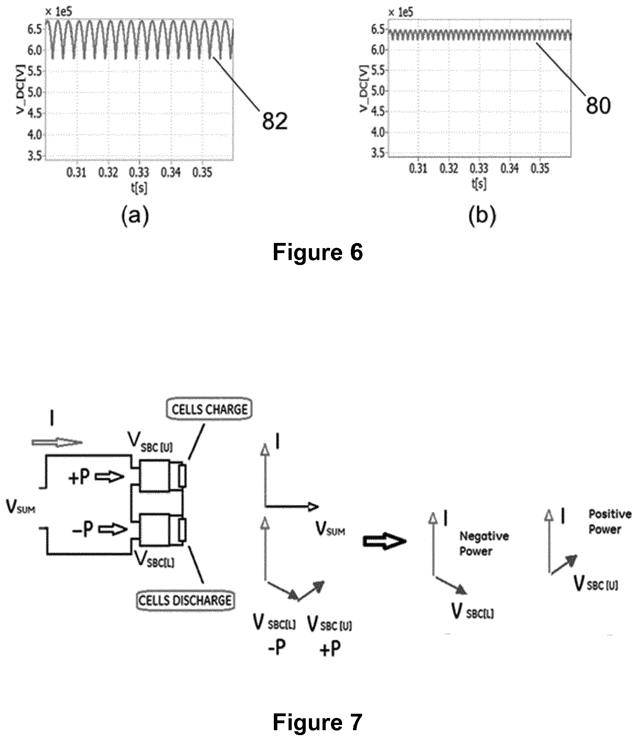

Figure 6 illustrates the results of a simulation model of the voltage source converter 30 of Figure 1. In the simulation model, the real power of the AC network 54 is given by P = ±600MW, the reactive power of the AC network 54 is given by Q = ±240MVAr (±0.4p.u.), the line to line AC voltage of the AC network 54 is given by VAC = 400kV±5%, the impedance of the transformer assembly is given by Z = 12%, the reactance to resistance ratio of the transformer assembly is given by X/R = 60, the DC voltage at the first DC terminal 32 is given by V_{DC1} = +320kV and the DC voltage at the second DC terminal 34 is given by V_{DC2} = -320 kV. In addition, the voltage source converter 30 was simulated with the first and second AC voltage waveforms V_{SBC(U)},V_{SBC(L)} having a zero electrical degrees phase shift relative to the resultant AC voltage waveform V_{SUM} for each limb 38, and with the first and second AC voltage waveforms V_{SBC(U)},V_{SBC(L)} respectively having +15 and -15 electrical degrees phase shifts relative to the resultant AC voltage waveform V_{SUM} for each limb 38.

It can be seen from Figure 6 that the generation of the first and second AC voltage waveforms V_{SBC(U)},V_{SBC(L)} respectively having +15 and -15 electrical degrees phase shifts relative to the resultant AC voltage waveform V_{SUM} results in a lower amount of ripple 80 in the summed DC voltage 60 presented to the DC network 58 as shown in Figure 6(b), when compared to the amount of ripple 82 resulting from the generation of the first and second AC voltage waveforms V_{SBC(U)},V_{SBC(L)} respectively having a zero electrical degrees phase shift relative to the resultant AC voltage waveform V_{SUM} as shown in Figure 6(a). In fact, the summed DC voltage 60 for the former contains ripple 80 in the form of the 12^{th} harmonic and/or multiples thereof, unlike the summed DC voltage 60 for the latter which contains ripple 82 in the form of the 6^{th} harmonic and/or multiples thereof.

The provision of the independently controllable first and second sub-limbs 40,42 in the limbs 38 of the voltage source converter 30 therefore enables the first and second sub-limbs 40,42 to be operated with a phase difference therebetween so as to control the configuration of a resultant AC voltage waveform V_{SUM} at the common AC phase terminal 36 and at the same time reduce the amount of ripple in the summed DC voltage 60 presented to the DC network 58.

Due to the reduction in the amount of ripple in the summed DC voltage 60 presented to the DC network 58, the use of a separate active or passive DC filter for use with the voltage source converter 30 of Figure 1 becomes more practical and economical when compared to a DC filter for use with the conventional voltage source converter 64 of Figure 4. This enables the optimisation of the overall voltage source converter 30 in terms of cost, weight, footprint and efficiency. Additionally, the reduction in the amount of ripple in the summed DC voltage 60 presented to the DC network 58 can reduce the additional hardware required to meet DC network power quality requirements and/or enable the connection to low cost cross-linked polyethylene HVDC cables. Modern cross-linked polyethylene HVDC cables are not tolerant of continuous AC voltage stress, and the ripple in the DC voltage drives associated alternating currents into DC transmission lines, which add to the thermal loading of the DC transmission lines and can contribute to electromagnetic interference.

As explained above, the exchange of real power by the voltage source converter 30 with the AC network 54 causes the first and second sub-limbs 40,42 of each limb 38 to operate with reactive power of opposite polarities.

On the other hand, if each limb 38 of the voltage source converter 30 is operated to exchange reactive power with the AC network 54, configuring the phase elements 44 of the first and second sub-limbs 40,42 in the first and second operating modes respectively results in the first sub-limb 40 operating with positive real power and in the second sub-limb 42 operating with negative real power, since the phase element 44 of the first sub-limb 40 acts as a rectifier while the phase element 44 of the second sub-limb 42 acts as an inverter, as illustrated in Figure 7.

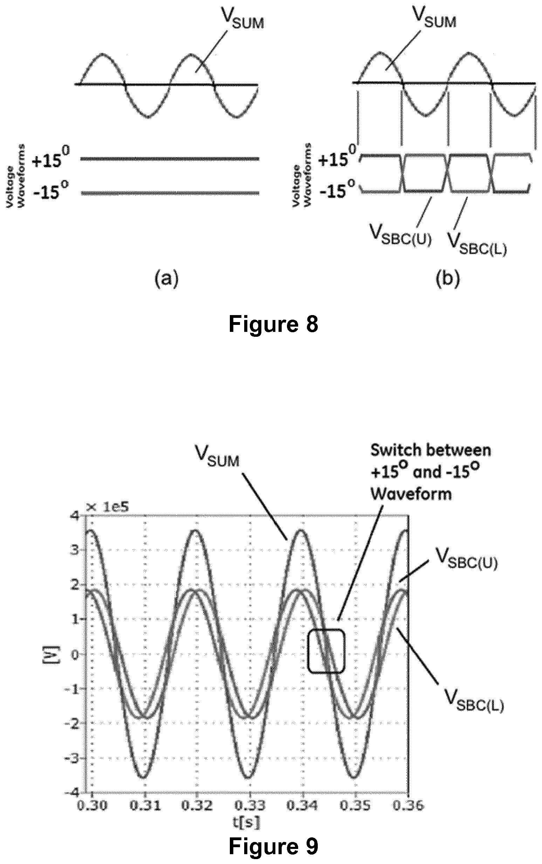

As illustrated in Figure 8(a), if the phase element 44 of the first sub-limb 40 is continuously configured in the first operating mode and the phase element 44 of the second sub-limb 42 is continuously configured in the second operating mode, this in turn would result in the energy level of the first sub-limb 40 experiencing a net increase caused by the charging of the energy storage devices of its first sub-converter 46, and the energy level of the second sub-limb 42 experiencing a net decrease caused by the discharging of the energy storage devices of its first sub-converter 46. Similarly, if the phase element 44 of the first sub-limb 40 is continuously configured in the second operating mode and the phase element 44 of the second sub-limb 42 is continuously configured in the first operating mode, this in turn would result in the energy level of the first sub-limb 40 experiencing a net decrease caused by the discharging of the energy storage devices of its first sub-converter 46, and the energy level of the second sub-limb 42 experiencing a net increase caused by the charging of the energy storage devices of its first sub-converter 46. As stated above, such energy accumulation in, or energy loss from, from the energy storage devices of each sub-limb 40,42 could result in undesirable deviation of the energy level of at least one energy storage device from a reference value, which could impact on the ability of the voltage source converter 30 to reliably exchange reactive power with the AC network 54.

Regulation of the energy level of the energy storage devices of each sub-limb 40,42 can be achieved by switching the switching elements of the phase elements 44 so that the phase element 44 of each sub-limb 40,42 alternates between the first and second operating modes. More specifically, in each limb 38, while the phase element 44 of each sub-limb 40,42 is controlled to alternate between the first and second operating modes, the phase element 44 of one of the first and second sub-limbs 40,42 is controlled to be in one of the first and second operating modes while the phase element 44 of the other of the first and second sub-limbs 40,42 is controlled to be in the other of the first and second operating modes. Accordingly, each of the first and second AC voltage waveforms V_{SBC(U)},V_{SBC(L)} at the AC terminals 48 of the first and second sub-limbs 40,42 has a phase shift relative to the resultant AC voltage waveform V_{SUM} that alternates between -15 electrical degrees and +15 electrical degrees. Meanwhile the magnitude and phase angle of the resultant AC voltage waveform V_{SUM} remains unchanged, since the resultant AC voltage waveform V_{SUM} is the vector sum of the first and second AC voltage waveforms V_{SBC(U)},V_{SBC(L)}.

Figure 8(b) illustrates the phase elements 44of the first and second sub-limbs 40,42 in each limb 38 alternating between the first and second operating modes. Each phase element 44 is controlled to switch between the first and second operating modes at a zero-crossing point of the resultant AC voltage waveform V_{SUM}. The phase element 44 of each sub-limb 40,42 is controlled to spend equal amounts of time in the first and second operating modes over a power frequency cycle of the resultant AC voltage waveform V_{SUM} so that each sub-limb 40,42 operates with equal amounts of positive real power and negative real power over the power frequency cycle. This enables the controlled charging and discharging of the energy storage devices of each sub-limb 40,42, which can be used to regulate the energy level of each energy storage device of each sub-limb 40,42 to a desired reference value. This allows a net change in energy stored in the energy storage devices of each sub-limb 40,42 to be controlled to be zero or substantially zero over each power frequency cycle of the resultant AC voltage waveform V_{SUM}.

It is envisaged that, in other embodiments of the invention, each phase element may be controlled to switch between the first and second operating modes at any other point of the resultant AC voltage waveform. It is also envisaged that, in still other embodiments of the invention, each phase element may be controlled to switch between the first and second operating modes several times over a power frequency cycle of the resultant AC voltage waveform.

Figure 9 illustrates the resultant, first and second AC voltage waveforms V_{SUM},V_{SBC(U)},V_{SBC(L)} for each limb 38 when each phase element 44 is controlled to alternate between the first and second operating modes. Step changes are observed in the first and second AC voltage waveforms V_{SBC(U)},V_{SBC(L)} when the phase elements 44 of each sub-limb 40,42 switch between the first and second operating modes.

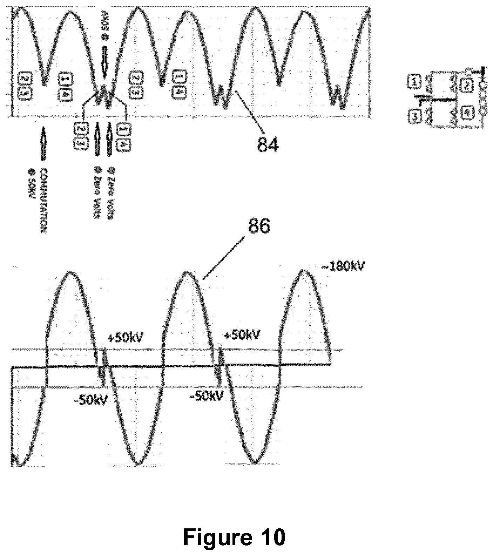

Figure 10 illustrates a DC side voltage 84 of each phase element 44 which is a rectified equivalent of the AC side voltage 86, namely the first and second AC voltage waveforms V_{SBC(U)},V_{SBC(L)} shown in Figure 9. Due to the step changes in each AC side voltage 86, there is an increase in the number of times the switching elements of each phase element 44 is required to turn on and turn off per power frequency cycle in comparison to the conventional voltage source converter 64 of Figure 4, and hard voltage switching of the switching elements of each phase element 44 takes place albeit at a relatively low voltage, e.g. -0.28 per unit.

Referring to Figure 10, it can be seen that, in each power frequency cycle, the set of switching elements represented by '1' turns on at 50kV, turns off at zero voltage, turns on again at 50kV and again turns off at zero voltage. Conversely, the set of switching elements represented by '2' turns off at 50kV, turns on at zero voltage, turns off at 50kV and turns on again at 50kV. By considering the two sets of switching elements and averaging, each set of switching elements experiences one turn-on and one turn off at 50kV and one turn-on and one turn-off at zero voltage. As a result, the commutation frequency is now 100Hz compared to a commutation frequency of 50Hz in the conventional voltage source converter 64 of Figure 4.

The provision of the control of the first and second sub-limbs 40,42 to each alternate between the first and second operating modes therefore avoids the aforementioned undesirable deviation of the energy level of at least one energy storage device from a reference value arising from continuously operating each sub-limb 40,42 in only one of the first and second operating modes. This thereby allows the voltage source converter 30 to reliably exchange reactive power with the AC network 54, thus permitting operation of the voltage source converter 30 over a wide P-Q envelope.

An AC fault may occur in the AC network 54, resulting in an AC voltage depression in one or more phases of the AC network 54. During the AC fault, the phase difference between the first and second AC voltage waveforms V_{SBC(U)},V_{SBC(L)} may be increased above 30 electrical degrees. For example, if the phase difference between the first and second AC voltage waveforms V_{SBC(U)},V_{SBC(L)} is increased to 120 electrical degrees, then the magnitude of the resultant AC voltage waveform V_{SUM} would be reduced to approximately 52% of its nominal value. In the limit of a 180 electrical degrees phase difference between the first and second AC voltage waveforms V_{SBC(U)},V_{SBC(L)}, the resultant AC voltage waveform V_{SUM} is reduced to zero.

The provision of the independently controllable first and second sub-limbs 40,42 of each limb 38 therefore enables the resultant AC voltage waveform V_{SUM} for each limb 38 to be reduced in response to an AC fault in the AC network 54, without impacting on the ability of the limbs 38 to continue supporting the summed DC voltage 60 between the DC terminals 32,34. As a result the voltage source converter 30 is provided with a large range of AC voltage control to provide enhanced AC fault ride-through capability.

Also, the alternating of the phase elements 44 of the first and second sub-limbs 40,42 between the first and second operating modes is also applicable to the operation of the voltage source converter 30 in response to the occurrence of the AC fault. This is particularly advantageous due to the need to control the voltage source converter 30 to exchange reactive power to support the AC network 54 and help with AC voltage restoration.

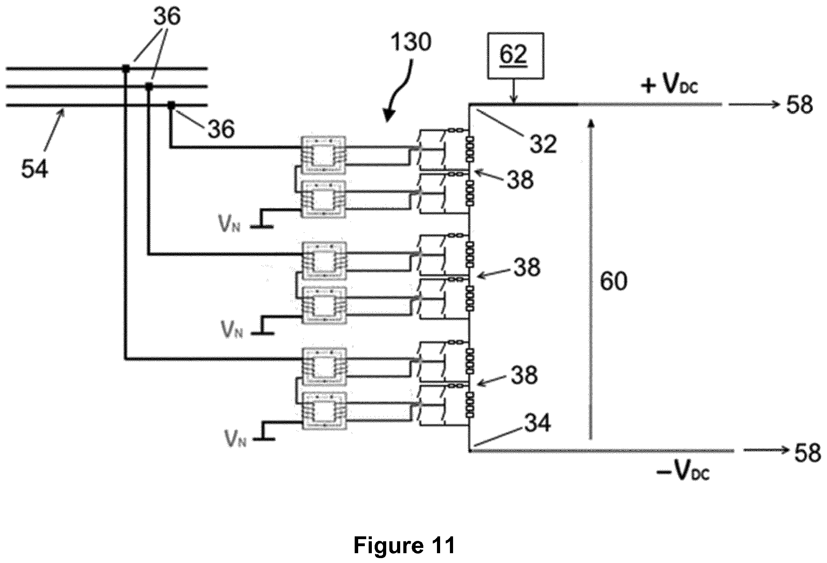

A voltage source converter according to a second embodiment of the invention is shown in Figure 11 and is designated generally by the reference numeral 130. The voltage source converter 130 of Figure 11 is similar in structure and operation to the voltage source converter 30 of Figure 1, and like features share the same reference numerals.

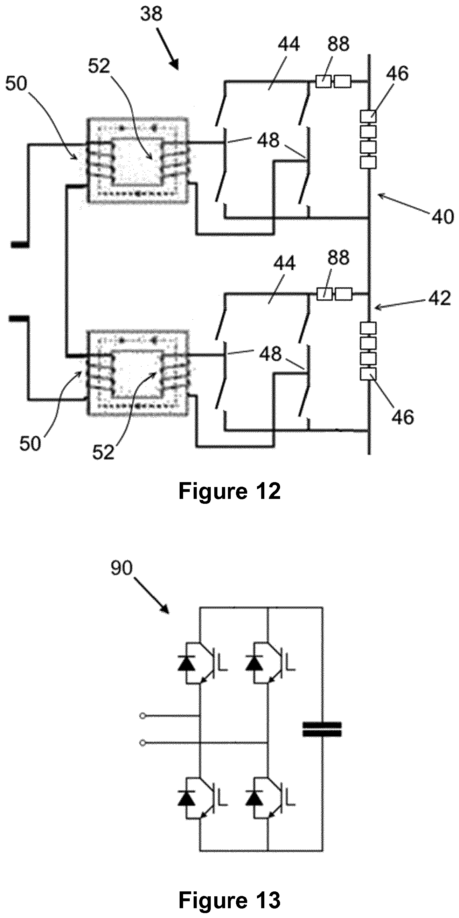

The voltage source converter 130 of Figure 11 differs from the voltage source converter 30 of Figure 1 that each sub-limb 40,42 of each limb 38 of the voltage source converter 130 of Figure 11 includes a second sub-converter 88, as shown in Figure 12. In each sub-limb 40,42, each phase element 44 is connected in series with a respective one of the plurality of second sub-converters 88 to define an electrical block. Each first sub-converter 46 is connected in parallel with a respective one of the electrical blocks.

Each second sub-converter 88 includes a plurality of modules 90. Each module 90 of each second sub-converter 88 includes two pairs of switching elements and an energy storage device in the form of a capacitor. In each module 90 of each second sub-converter 88, the pairs of switching elements are connected in parallel with the capacitor in a full-bridge arrangement to define a 4-quadrant bipolar module that can provide negative, zero or positive voltage and can conduct current in two directions, as shown in Figure 13.

The parallel connection of the first sub-converter 46 and electrical block in each limb 38 permits the first sub-converter 46 to selectively act as a waveform synthesizer to modify a first DC voltage that is presented to the DC network 58.

The series connection of the second sub-converter 88 and phase element 44 in each limb 38 permits the second sub-converter 88 to selectively act as a waveform synthesizer to modify a second DC voltage at a DC side of the corresponding phase element 44. Such modification of the second DC voltage at the DC side of the corresponding phase element 88 results in a corresponding modification of the AC side voltage at the AC side of the corresponding phase element 88.

The capacitor of each module 90 is selectively bypassed or inserted into the chain-link converter by changing the states of the switching elements. This selectively directs current through the capacitor or causes current to bypass the capacitor so that the module 90 provides a negative, zero or positive voltage in the case of each second sub-converter 88.

The capacitor of the module 90 is bypassed when the switching elements in the module 90 are configured to form a short circuit in the module 90. This causes current in the chain-link converter to pass through the short circuit and bypass the capacitor, and so the module 90 provides a zero voltage, i.e. the module is configured in a bypassed mode.

The capacitor of the module 90 is inserted into the chain-link converter when the switching elements in the module 90 are configured to allow the current in the chain-link converter to flow into and out of the capacitor. The capacitor then charges or discharges its stored energy so as to provide a positive or negative voltage, i.e. the module 90 is configured in a non-bypassed mode. The switching elements of the module 90 may be configured to direct the current to flow through the capacitor in either direction so as to control the polarity of the voltage provided by the module 90.

The controller 62 is further programmed to control the second sub-converters 88.

In use, each second sub-converter 88 is operable to shape the second DC voltage at the DC side of each phase element 44. The provision of each second sub-converter 88 in each sub-limb 40,42 therefore provides the voltage source converter with an inbuilt active DC filter.

It is envisaged that, in other embodiments of the invention, the configuration of each second sub-converter may vary as long as each second sub-converter is capable of selectively acting as a waveform synthesizer to modify the respective second DC voltage.

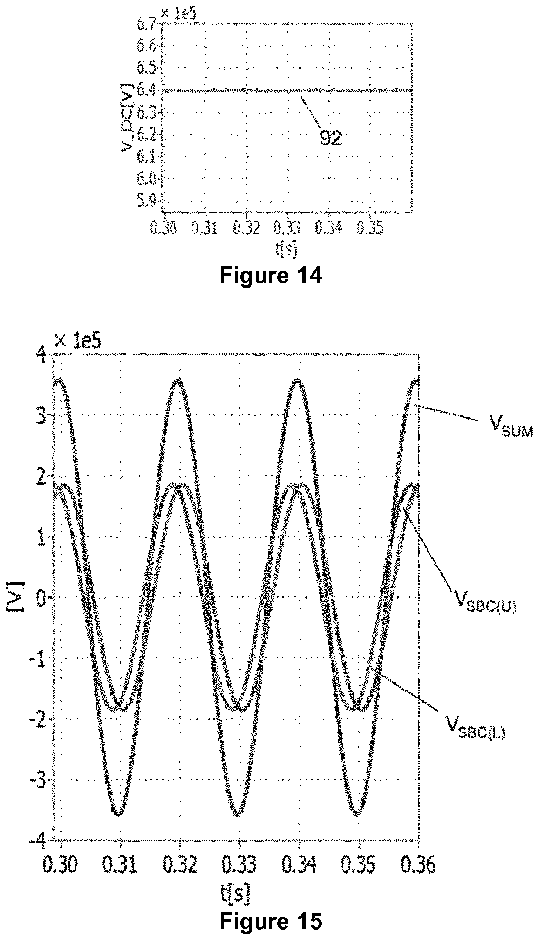

Figures 14 to 16 illustrate the results of a simulation model of the voltage source converter 130 of Figure 11. In the simulation model, the real power of the AC network 54 is given by P = ±600MW, the reactive power of the AC network 54 is given by Q = ±240MVAr (±0.4p.u.), the line to line AC voltage of the AC network 54 is given by VAC = 400kV±5%, the impedance of the transformer assembly is given by Z = 12%, the reactance to resistance ratio of the transformer assembly is given by X/R = 60, the DC voltage at the first DC terminal 32 is given by V_{DC1} = +320kV and the DC voltage at the second DC terminal 34 is given by V_{DC2} = -320 kV. In addition, the voltage source converter 130 was simulated with the first and second AC voltage waveforms V_{SBC(U)},V_{SBC(L)} having a zero electrical degrees phase shift relative to the resultant AC voltage waveform V_{SUM} for each limb 38, and with the first and second AC voltage waveforms V_{SBC(U)},V_{SBC(L)} respectively having +15 and -15 electrical degrees phase shifts relative to the resultant AC voltage waveform V_{SUM} for each limb 38.

It can be seen from Figure 14 that the generation of the first and second AC voltage waveforms V_{SBC(U)},V_{SBC(L)} respectively having +15 and -15 electrical degrees phase shifts relative to the resultant AC voltage waveform V_{SUM} results in a low amount of ripple 92 in the summed DC voltage 60 presented to the DC network 58, which is similar to the amount of ripple 80 shown in Figure 6(b).

Figure 15 illustrates the resultant, first and second AC voltage waveforms V_{SUM},V_{SBC(U)},V_{SBC(L)} for each limb 38 when each phase element 44 is controlled to alternate between the first and second operating modes. Step changes are observed in the first and second AC voltage waveforms V_{SBC(U)},V_{SBC(L)} when the phase elements 44 of each sub-limb 40,42 switch between the first and second operating modes.

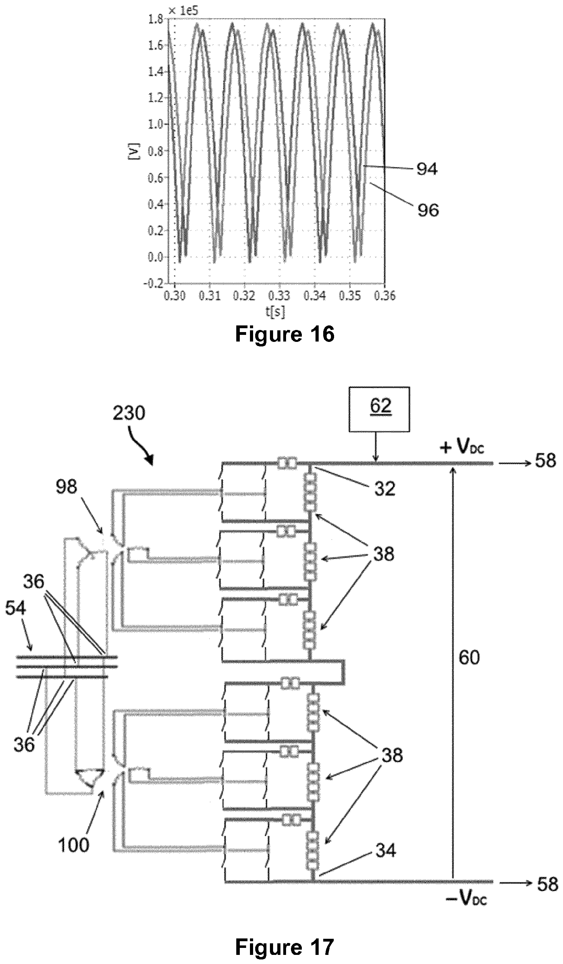

Figure 16 illustrates a DC side voltage 94,96 of each phase element which is a rectified equivalent of the AC side voltage, namely the first and second AC voltage waveforms V_{SBC(U)},V_{SBC(L)}, shown in Figure 15.

The reduction in the amount of ripple in the summed DC voltage 60 presented to the DC network 58 advantageously lowers the harmonic filtering requirements of the second sub-converters 88 and thereby permits a corresponding reduction in the rating of each second sub-converter 88, thus providing improvements in terms of cost, weight, footprint and conduction losses of the voltage source converter 130 of Figure 11.

A voltage source converter according to a third embodiment of the invention is shown in Figure 17 and is designated generally by the reference numeral 230. The voltage source converter 230 of Figure 17 is similar in structure and operation to the voltage source converter 130 of Figure 11, and like features share the same reference numerals.

The voltage source converter 230 of Figure 17 differs from the voltage source converter 130 of Figure 11 in that, instead of having the plurality of limbs 38 with the first and second sub-limbs 40,42, the voltage source converter 230 of Figure 17 includes a first group of series-connected first limbs 38 and a second group of series-connected second limbs 38, where each limb 38 includes a phase element 44, a first sub-converter 46 and a second sub-converter 88. The features and arrangement of the phase element 44, the first sub-converter 46 and the second sub-converter 88 in each limb 38 are as described hereinabove with reference to the features and arrangement of the phase element 44, the first sub-converter 46 and the second sub-converter 88 in each sub-limb 40,42 of the voltage source converter 130 of Figure 11. It will be appreciated that the second sub-converter 88 may be omitted from each limb 38 depending on the filtering requirements of the voltage source converter 230.

The first and second groups of series-connected limbs 38 are connected in series between the first and second DC terminals 32,34, where the first group of series-connected first limbs 38 are connected towards the first DC terminal 32, and the second group of series-connected second limbs 38 are connected towards the second DC terminal 34.

The voltage source converter 230 further includes first and second transformer assemblies 98,100.

The AC terminals 48 of the phase elements 44 of the first limbs 38 are connected via the first transformer assembly 98 to the AC phase terminals 36. More specifically, the AC terminals 48 of the phase elements 44 of the first limbs 38 are connected to the AC phase terminals 36 via primary and secondary transformer windings of the first transformer assembly 98, where the AC terminals 48 of the phase element 44 of each first limb 38 are connected to respective ends of a respective one of the secondary transformer windings, each secondary transformer winding is mutually coupled with a respective one of the primary transformer windings, and each primary transformer winding is connected to a respective one of the AC phase terminals 36. The primary transformer windings are arranged in a grounded star-connected configuration, while each secondary winding is in the form of an open winding for connection to the AC terminals 48 of the phase element 44 of the corresponding first limb 38.

The AC terminals 48 of the phase elements 44 of the second limbs 38 are connected via the second transformer assembly 100 to the AC phase terminals 36. More specifically, the AC terminals 48 of the phase elements 44 of the second limbs 38 are connected to the AC phase terminals 36 via primary and secondary transformer windings of the second transformer assembly 100, where the AC terminals 48 of the phase element 44 of each second limb 38 are connected to respective ends of a respective one of the secondary transformer windings, each secondary transformer winding is mutually coupled with a respective one of the primary transformer windings, and each primary transformer winding extends between two of the AC phase terminals 36. The primary transformer windings are arranged in a delta-connected configuration, while each secondary winding is in the form of an open winding for connection to the AC terminals 48 of the phase element 44 of the corresponding second limb 38.

Each AC phase terminal 36 is connected to a respective phase of a three-phase AC network 54.

The star-connected configuration of the first transformer assembly 98 and the delta-connected configuration of the second transformer assembly 100 results in the provision of a phase shift between AC voltage waveforms at the AC terminals 48 of the phase elements 44 of each pair of the first and second limbs 38 operably connected to the same AC phase.

Due to the phase shift between the AC voltage waveforms at the AC terminals 48 of the phase elements 44 of each pair of the first and second limbs 38 operably connected to the same AC phase, a corresponding phase shift is also present between the DC side voltages at the DC sides of the phase elements 44 of each pair of the first and second limbs 38. This in turn provides a phase shift between the respective DC voltages presented by each pair of the first and second limbs 38, which results in a reduction in the amount of ripple in the summed DC voltage 60 presented to the DC network 58.

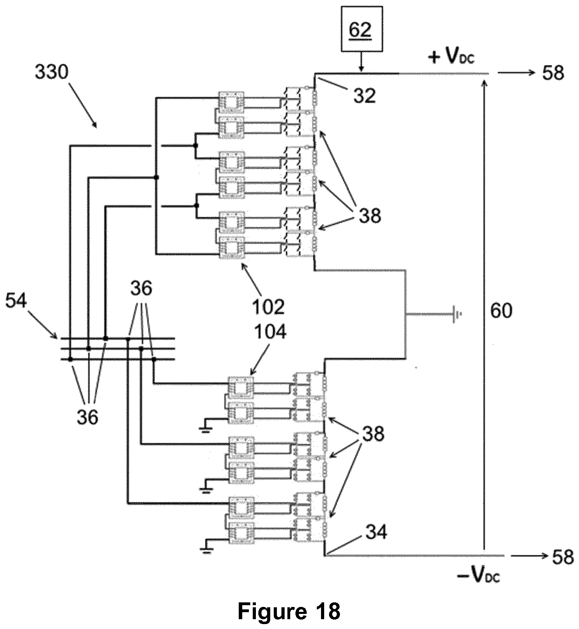

A voltage source converter according to a fourth embodiment of the invention is shown in Figure 18 and is designated generally by the reference numeral 330. The voltage source converter 330 of Figure 18 is similar in structure and operation to the voltage source converter 230 of Figure 17, and like features share the same reference numerals.

The voltage source converter 330 of Figure 18 differs from the voltage source converter 230 of Figure 17 in that, in the voltage source converter 330 of Figure 18, each limb 38 includes first and second sub-limbs 40,42, and the configurations of the first and second transformer assemblies 102,104 are different.

The structure and operation of the first and second sub-limbs 40,42 of each limb 38 of the voltage source converter 330 of Figure 18 are as described hereinabove with reference to the structure and operation of the first and second sub-limbs 40,42 of each limb 38 of the voltage source converter 130 of Figure 11.

The AC terminals 48 of the phase elements 44 of the first limbs 38 are connected via the first transformer assembly 102 to the AC phase terminals 36. For each first limb 38, the AC terminals 48 of the phase element 44 of each of the first and second sub-limbs 40,42 are connected to respective ends of a respective secondary transformer winding, the respective secondary transformer winding is mutually coupled with a respective primary transformer sub-winding, and the primary transformer sub-windings are connected in series to define a primary transformer winding extending between two of the three AC phase terminals 36. The primary transformer windings of the first transformer assembly 102 are arranged in a delta-connected configuration, while each secondary winding is in the form of an open winding for connection to the AC terminals 48 of the phase element 44 of the corresponding sub-limb 40,42.

The AC terminals 48 of the phase elements 44 of the second limbs 38 are connected via the second transformer assembly 104 to the AC phase terminals 36. For each second limb 38, the AC terminals 48 of the phase element 44 of each of the first and second sub-limbs 40,42 are connected to respective ends of a respective secondary transformer winding, the respective secondary transformer winding is mutually coupled with a respective primary transformer sub-winding, and the primary transformer sub-windings are connected in series to define a primary transformer winding extending between an AC phase terminal 36 and ground. The primary transformer windings of the second transformer assembly 104 are arranged in a star-connected configuration, while each secondary winding is in the form of an open winding for connection to the AC terminals 48 of the phase element 44 of the corresponding sub-limb 40,42.

Each AC phase terminal 26 is connected to a respective phase of a three-phase AC network 54.

Where applicable, the following operation of the voltage source converter 330 has been described with reference to one of the phases, and it will be understood that such description applies mutatis mutandis to the other two phases unless specified otherwise.

Each of the delta-connected primary transformer windings experience a line-to-line AC voltage of the AC network 54, while each of the star-connected primary transformer windings experience a line-to-neutral AC voltage of the AC network 54. As a result, for each phase, a primary side voltage of each delta-connected primary transformer winding has a -30 electrical degrees phase shift relative to the line-to-neutral AC voltage of the AC network 54, while a primary side voltage of each star-connected primary transformer winding has a zero electrical degrees phase shift relative to the line-to-neutral AC voltage of the AC network 54.

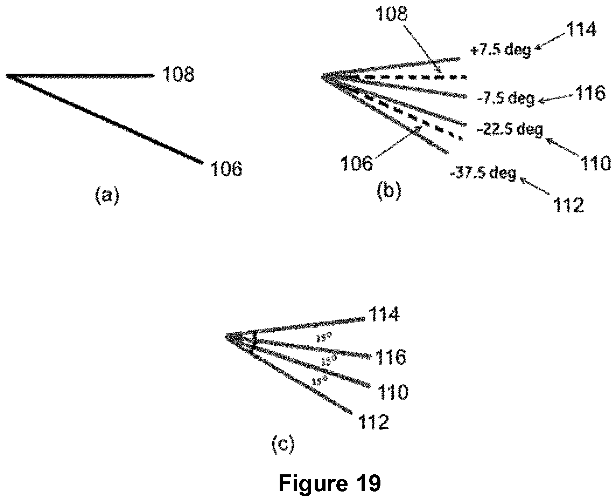

Figure 19(a) illustrates the phase difference between the primary side voltage of the delta-connected primary transformer winding (represented by a voltage vector 106) and the primary side voltage of the star-connected primary transformer winding (represented by a voltage vector 108) for a given phase.

For each limb 38, due to the configuration of the first and second sub-limbs 40,42, the primary side voltage of the corresponding primary transformer winding is the vector sum of the AC voltage waveforms at the AC terminals 48 of the phase elements 44 of the first and second sub-limbs 40,42. For convenience, the primary side voltage of the corresponding primary transformer winding is referred to as the resultant AC voltage waveform, the AC voltage waveform at the AC terminals 48 of the phase element 44 of the first sub-limb 40 is referred to as the first AC voltage waveform, and the AC voltage waveform at the AC terminals 48 of the phase element 44 of the second sub-limb 42 is referred to as the second AC voltage waveform.

The amount of ripple in the summed DC voltage 60 presented to the DC network 58 is reduced by switching the switching elements of the phase elements 44 of the sub-limbs 40,42 so as to control the phase element 44 of each first sub-limb 40 to be in a first operating mode and control the phase element 44 of each second sub-limb 42 to be in a second operating mode. In the first operating mode, the phase element 44 is operated to control the configuration of the first AC voltage waveform to have a positive phase shift relative to the resultant AC voltage waveform. In the second operating mode, the phase element 44 is operated to control the configuration of the second AC voltage waveform to have a negative phase shift relative to the resultant AC voltage waveform. The first and second AC voltage waveforms are controlled to be equal in magnitude.

For the first limb 38, the phase element 44 of the first sub-limb 40 is operated to control the configuration of the first AC voltage waveform to have a phase shift of +7.5 electrical degrees relative to the resultant AC voltage waveform, and the phase element 44 of the second sub-limb 42 is operated to control the configuration of the second AC voltage waveform to have a phase shift of -7.5 electrical degrees relative to the resultant AC voltage waveform, where the resultant AC voltage waveform is the primary side voltage of the delta-connected primary transformer winding which has a - 30 electrical degrees phase shift relative to the line-to-neutral AC voltage. As a result, for the first limb 38, the first AC voltage waveform has a phase shift of -22.5 electrical degrees relative to the line-to-neutral AC voltage, and the second AC voltage waveform has a phase shift of -37.5 electrical degrees relative to the line-to-neutral AC voltage.

For the second limb 38, the phase element 44 of the first sub-limb 40 is operated to control the configuration of the first AC voltage waveform to have a phase shift of +7.5 electrical degrees relative to the resultant AC voltage waveform, and the phase element 44 of the second sub-limb 42 is operated to control the configuration of the second AC voltage waveform to have a phase shift of -7.5 electrical degrees relative to the resultant AC voltage waveform, where the resultant AC voltage waveform is the primary side voltage of the star-connected primary transformer winding which has a zero electrical degrees phase shift relative to the line-to-neutral AC voltage. As a result, for the second limb 38, the first AC voltage waveform has a phase shift of +7.5 electrical degrees relative to the line-to-neutral AC voltage, and the second AC voltage waveform has a phase shift of -7.5 electrical degrees relative to the line-to-neutral AC voltage.

Figure 19(b) and 19(c) illustrate the relative displacement between voltage vectors 110,112,114,116 corresponding to the four AC voltage waveforms at the AC terminals 48 of the phase elements 44 of the limbs 38 associated with a given phase of the AC network 54. It can be seen that the voltage vectors 110,112,114,116 are successively displaced relative to each other by 15 electrical degrees, thus resulting in the configuration of the voltage source converter 330 of Figure 18 as a 24-pulse voltage source converter.

The phase element 44 of each sub-limb 40,42 contributes a respective DC side voltage such that the summed DC voltage 60 presented by the limbs 38 to the DC network 58 is the sum of the DC side voltages of the phase elements 44 of the series-connected limbs 38, which are in the form of a plurality of full wave rectified sinusoidal waveforms operating with different phase angles. Since there are four DC side voltages associated with each of the three phases of the AC network 54, there are twelve full wave rectified sinusoidal waveforms which sum together to present a summed DC voltage 60 with a low ripple content containing the 24^{th} harmonic and/or multiples thereof (e.g. 48^{th}, 72^{nd} and so on). Hence, in comparison to the conventional voltage source converter 64 of Figure 4, the configuration of the voltage source converter 330 of Figure 18 enables a significant reduction in the amount of ripple in the summed DC voltage 60 presented to the DC network 58, which is achieved by combining the principle of the electronically controlled phase shifting described hereinabove with reference to the voltage source converters 30,130 of Figures 1 and 11 together with the principle of the transformer-based phase shifting described hereinabove with reference to the voltage source converter 230 of Figure 17. Such reduction in the amount of ripple in the summed DC voltage 60 presented to the DC network 58 further lowers the harmonic filtering requirements of the second sub-converters 88 and thereby permits a corresponding reduction in the rating of each second sub-converter 88, thus providing improvements in terms of cost, weight, footprint and conduction losses in the voltage source converter 330 of Figure 18.

It is envisaged that, in other embodiments of the invention, the second sub-converters 88 may be omitted from the sub-limbs 40,42, and a separate active or passive DC filter is used to filter harmonics from the DC voltage 60 presented to the DC network 58. Since the DC filter would only be required to filter the 24^{th} harmonic and/or multiples thereof, the harmonic filtering requirements of the DC filter for use with the voltage source converter 330 of Figure 18 can be reduced when compared to a DC filter for use with the conventional voltage source converter 64 of Figure 4.

Also, regulation of the energy level of the energy storage devices of each sub-limb 40,42 can be achieved by switching the switching elements of the phase elements 44 so that the phase element 44 of each sub-limb 40,42 alternates between the first and second operating modes. More specifically, in each limb 38, while the phase element 44 of each sub-limb 40,42 is controlled to alternate between the first and second operating modes, the phase element 44 of one of the first and second sub-limbs 40,42 is controlled to be in one of the first and second operating modes while the phase element 44 of the other of the first and second sub-limbs 40,42 is controlled to be in the other of the first and second operating modes. Accordingly, each of the first and second AC voltage waveforms at the AC terminals 48 of the first and second sub-limbs 40,42 has a phase shift relative to the resultant AC voltage waveform that alternates between -7.5 electrical degrees and +7.5 electrical degrees. Meanwhile the magnitude and phase angle of the resultant AC voltage waveform remains unchanged, since the resultant AC voltage waveform is the vector sum of the first and second AC voltage waveforms.

The phase difference between the first and second AC voltage waveforms at the AC terminals 48 of the phase elements 44 of each limb 38 of the voltage source converter 330 of Figure 18 is lower than the phase difference between the first and second AC voltage waveforms at the AC terminals 48 of the phase elements 44 of each limb 38 of the voltage source converters 30,130 of Figures 1 and 11. As a result, the hard voltage switching of the switching elements of each phase element 44 associated with the switching of each phase element 44 between the first and second operating modes takes place at a lower voltage in comparison to the hard voltage switching described hereinabove with reference to the voltage source converter 30,130 of Figures 1 and 11.

The enhanced AC fault ride-through capability described hereinabove with reference to the voltage source converters 30,130 of Figures 1 and 11 applies mutatis mutandis to the voltage source converter 330 of Figure 18. In addition, the alternating of the phase elements 44 of the first and second sub-limbs 40,42 between the first and second operating modes described hereinabove with reference to the voltage source converters 30,130 of Figures 1 and 11 is also applicable to the operation of the voltage source converter of Figure 18 in response to an occurrence of an AC fault in the AC network 54, so as to assist in the control of the voltage source converter 330 to exchange reactive power to support the AC network 54 and help with AC voltage restoration.

It is envisaged that, in other embodiments of the invention, the number of limbs, sub-limbs and/or transformer assemblies in the voltage source converter may vary in number in order to provide a voltage source converter with a higher or lower pulse configuration.

It will be appreciated that the voltage source converter may include a different number of a plurality of limbs, each of which is connectable to a respective phase of a multi-phase AC network with the corresponding number of phases, or may include a single limb connectable to a single-phase AC network.

It is envisaged that, in other embodiments of the invention, one or more limbs may include at least one additional sub-limb. In other words, each limb may include two, three, four, five or more sub-limbs in total.

It will be also appreciated that each numerical value used in respect of the above embodiments is not intended to be limiting on the scope of the invention but instead is chosen to illustrate the working of the invention, and may be replaced by a different numerical value.

It will be further appreciated that at least one feature of any of the above embodiments of the invention may be incorporated into, or combined with, any of the other embodiments.

## Claims

1. A voltage source converter (30,130,330) comprising first and second DC terminals (32,34) for connection to a DC network (54), the voltage source converter (30,130,330) further comprising an AC phase terminal (36) for connection to a phase of an AC network (54), the voltage source converter (30,130,330) including a limb (38) connected between the first and second DC terminals (32,34), the limb (38) including first and second sub-limbs (40,42) connected between the first and second DC terminals (32,34), each sub-limb (40,42) including a phase element (44), each phase element (44) including a plurality of switching elements and at least one AC terminal (48), the or each AC terminal (48) of each phase element (44) operably connected to the AC phase terminal (36) such that an AC voltage waveform at the AC phase terminal (36) is the vector sum of the AC voltage waveforms at the AC terminals (48) of the phase elements (44) of the first and second sub-limbs (40,42), the plurality of switching elements of each phase element (44) configured to be switchable to selectively interconnect a DC side voltage (84,94,96) at a DC side of the phase element (44) and an AC side voltage (86) at an AC side of the phase element (44), each sub-limb (40,42) further including at least one energy storage device connected at the DC side of the phase element (44), wherein the voltage source converter (30,130,330) further includes a controller (62) programmed to control the switching of the switching elements of the phase elements (44) so as to control each phase element (44) to alternately switch between: a first operating mode to control the configuration of an AC voltage waveform at the or each corresponding AC terminal (48) to have a positive phase shift relative to the AC voltage waveform at the AC phase terminal (36); and a second operating mode to control the configuration of an AC voltage waveform at the or each corresponding AC terminal (48) to have a negative phase shift relative to the AC voltage waveform at the AC phase terminal (36), wherein the controller (62) is programmed to control the switching of the switching elements of the phase elements (44) so that, in use, while each phase element (44) is controlled to switch between the first and second operating modes, one of the phase elements (44) of the first and second sub-limbs (40,42) is controlled to be in one of the first and second operating modes while the other of the phase elements (44) of the first and second sub-limbs (40,42) is controlled to be in the other of the first and second operating modes.

2. A voltage source converter (30,130,330) according to any one of the preceding claims wherein the controller (62) is programmed to control the switching of the switching elements of the phase elements (44) so as to control each phase element (44) to switch between the first and second operating modes so that, in use, a net change in energy stored in the or each energy storage device of each sub-limb (40,42) is controlled to be zero or substantially zero.

3. A voltage source converter (30,130,330) according to any one of the preceding claims wherein the controller (62) is programmed to control the switching of the switching elements of the phase elements (44) so as to control each phase element (44) to switch between the first and second operating modes a single time or several times over a power frequency cycle of the AC voltage waveform at the AC phase terminal (36).

4. A voltage source converter (30,130,330) according to any one of the preceding claims wherein the controller (62) is programmed to control the switching of the switching elements of the phase elements (44) so as to control each phase element (44) to switch between the first and second operating modes at a zero-crossing point of the AC voltage waveform at the AC phase terminal (36).

5. A voltage source converter (30,130,330) according to any one of the preceding claims wherein the controller (62) is programmed to control the switching of the switching elements of the phase elements (44) so as to control each phase element (44) to switch between the first and second operating modes in response to an AC fault in the AC network (54).

6. A voltage source converter (30,130,330) according to any one of the preceding claims wherein the sub-limbs (40,42) of the limb (38) are connected in series between the first and second DC terminals (32,34).

7. A voltage source converter (30,130,330) according to any one of the preceding claims wherein the limb (38) includes at least one additional sub-limb.

8. A voltage source converter (30,130,330) according to any one of the preceding claims wherein each sub-limb (40,42) includes a first sub-converter (46) configured to be controllable to act as a waveform synthesizer to modify a first DC voltage presented to the DC network (54), the first sub-converter (46) of each sub-limb (40,42) including at least one energy storage device.

9. A voltage source converter (130,330) according to any one of the preceding claims wherein each sub-limb (40,42) includes a second sub-converter (88) connected with the phase element (44) in an electrical block, the first sub-converter (46) connected in parallel with the electrical block, the second sub-converter (88) configured to be controllable to act as a waveform synthesizer to modify a second DC voltage presented to the DC side of the phase element (54), the second sub-converter (88) including at least one energy storage device.

10. A voltage source converter (30,130,330) according to Claim 8 or Claim 9 wherein each sub-converter (46,88) includes at least one module (56,90), the or each module (56,90) including at least one switching element and at least one energy storage device, the or each switching element and the or each energy storage device in the or each module (56,90) arranged to be combinable to selectively provide a voltage source.

11. A voltage source converter (30,130,330) according to any one of the preceding claims wherein the voltage source converter (30,130,330) includes a plurality of AC phase terminals (36), each AC phase terminal (36) connectable to a respective phase of a multi-phase AC network (54), and the voltage source converter (30,130,330) further includes a plurality of limbs (38) connected between the first and second DC terminals (32,34), the AC terminals (48) of the phase elements (44) of each limb (38) operably connected to a respective one of the AC phase terminals (36).

12. A voltage source converter (30,130,330) according to Claim 11 wherein the limbs (38) are connected in series between the first and second DC terminals (32,34).

13. A voltage source converter (230) according to any of claims 1 to 12, comprising first and second DC terminals (32,34) for connection to a DC network (58), the voltage source converter (230) further comprising an AC phase terminal (36) for connection to a phase of an AC network (54), the voltage source converter (230) including first and second limbs (38) connected between the first and second DC terminals (32,34), each limb (38) including at least one phase element (44), each phase element (44) including a plurality of switching elements and at least one AC terminal, the plurality of switching elements of each phase element (44) configured to be switchable to selectively interconnect a DC side voltage at a DC side of the phase element (44) and an AC side voltage at an AC side of the phase element (44), each limb (38) further including a first sub-converter (46) connected at the DC side of the or each phase element (44), each first sub-converter (46) configured to be controllable to act as a waveform synthesizer to modify a first DC voltage presented to the DC network (58), each first sub-converter (46) including at least one energy storage device, wherein the voltage source converter (230) further includes first and second transformer assemblies (98,100), the first transformer assembly (98) arranged to operably connect the or each AC terminal (48) of the or each phase element (44) of the first limb (38) to the AC phase terminal (36), the second transformer assembly (100) arranged to operably connect the or each AC terminal (48) of the or each phase element (44) of the second limb (38) to the AC phase terminal (36), the first and second transformer assemblies (98,100) configured so that, in use, an AC voltage waveform at the or each AC terminal (48) of the or each phase element (44) of the first limb (38) is phase shifted relative to an AC voltage waveform at the or each AC terminal (48) of the or each phase element (44) of the second limb (38).

14. A voltage source converter (330) according to any of claims 1 to 13, comprising first and second DC terminals (32,34) for connection to a DC network (58), the voltage source converter (330) further comprising an AC phase terminal (36) for connection to a phase of an AC network (54), the voltage source converter (330) including first and second limbs (38) connected between the first and second DC terminals (32,34), each limb (38) including first and second sub-limbs (40,42) connected between the first and second DC terminals (32,34), each sub-limb (40,42) including a phase element (44), each phase element (44) including a plurality of switching elements and at least one AC terminal, the plurality of switching elements of each phase element (44) configured to be switchable to selectively interconnect a DC side voltage at a DC side of the phase element (44) and an AC side voltage at an AC side of the phase element (44), each sub-limb (40,42) further including at least one energy storage device connected at the DC side of the phase element (44), wherein the voltage source converter (330) further includes first and second transformer assemblies (102,104), the first transformer assembly (102) arranged to operably connect the or each AC terminal (48) of each phase element (44) of the first limb (38) to the AC phase terminal (36), the second transformer assembly (104) arranged to operably connect the or each AC terminal (48) of each phase element (44) of the second limb (38) to the AC phase terminal (36), the first and second transformer assemblies (102,104) configured so that, in use, an AC voltage waveform at the or each AC terminal (48) of each phase element (44) of the first limb (38) is phase shifted relative to an AC voltage waveform at the or each AC terminal (48) of each phase element (44) of the second limb (38), wherein the voltage source converter (330) further includes a controller (62) programmed to control the switching of the switching elements of the phase elements (44) so as to control each phase element (44) to control the configuration of an AC voltage waveform at the or each corresponding AC terminal (48) so that, in use, an AC voltage waveform at the or each AC terminal (48) of the phase element (44) of each first sub-limb (40) has a positive phase shift relative to the AC voltage waveform at the AC phase terminal (36), and an AC voltage waveform at the or each AC terminal (48) of the phase element (44) of each second sub-limb (42) has a negative phase shift relative to the AC voltage waveform at the AC phase terminal (36).

## Patentansprüche

1. Spannungsquellenwandler (30, 130, 330), umfassend erste und zweite GS-Anschlüsse (32, 34) zur Verbindung mit einem GS-Netzwerk (54), wobei der Spannungsquellenwandler (30, 130, 330) weiter einen WS-Phasenanschluss (36) zur Verbindung mit einer Phase eines WS-Netzwerks (54) umfasst, der Spannungsquellenwandler (30, 130, 330) einen Schenkel (38) zwischen dem ersten und dem zweiten WS-Anschluss (32, 34) verbunden beinhaltet, der Schenkel (38) erste und zweite Teilschenkel (40, 42) zwischen dem ersten und dem zweiten WS-Anschluss (32, 34) verbunden beinhaltet, jeder Teilschenkel (40, 42) ein Phasenelement (44) beinhaltet, jedes Phasenelement (44) eine Vielzahl von Schaltelementen und mindestens einen WS-Anschluss (48) beinhaltet, der oder jeder WS-Anschluss (48) jedes Phasenelements (44) betriebsfähig mit dem WS-Phasenanschluss (36) verbunden ist, sodass eine Wechselspannungswellenform bei dem WS-Phasenanschluss (36) die Vektorsumme der Wechselspannungswellenformen bei den WS-Anschlüssen (48) der Phasenelemente (44) des ersten und des zweiten Teilschenkels (40, 42) ist, die Vielzahl von Schaltelementen jedes Phasenelements (44) konfiguriert ist schaltbar zu sein, um selektiv eine GS-seitige Spannung (84, 94, 96) bei einer GS-Seite des Phasenelements (44) und eine WS-seitige Spannung (86) bei einer WS-Seite des Phasenelements (44) zu verbinden, jeder Teilschenkel (40, 42) weiter mindestens eine Energiespeichervorrichtung bei der GS-Seite des Phasenelements (44) verbunden beinhaltet, wobei der Spannungsquellenwandler (30, 130, 330) weiter eine Steuereinheit (62) beinhaltet, die programmiert ist, das Schalten der Schaltelemente der Phasenelemente (44) zu steuern, um jedes Phasenelement (44) zu steuern, wechselnd zwischen Folgendem umzuschalten: einem ersten Betriebsmodus, um die Konfiguration einer Wechselspannungswellenform bei dem oder jedem entsprechenden WS-Anschluss (48) zu steuern, eine positive Phasenverschiebung relativ zu der Wechselspannungswellenform bei dem WS-Phasenanschluss (36) aufzuweisen; und einem zweiten Betriebsmodus, um die Konfiguration einer Wechselspannungswellenform bei dem oder jedem entsprechenden WS-Anschluss (48) zu steuern, eine negative Phasenverschiebung relativ zu der Wechselspannungswellenform bei dem WS-Phasenanschluss (36) aufzuweisen,
wobei die Steuereinheit (62) programmiert ist, das Schalten der Schaltelemente der Phasenelemente (44) derart zu steuern, dass in Verwendung, während jedes Phasenelement (44) gesteuert wird, zwischen dem ersten und dem zweiten Betriebsmodus umzuschalten, eines der Phasenelemente (44) des ersten und des zweiten Teilschenkels (40, 42) gesteuert wird, in einem des ersten und des zweiten Betriebsmodus zu sein, während das andere der Phasenelemente (44) des ersten und des zweiten Teilschenkels (40, 42) gesteuert wird, in dem anderen des ersten und des zweiten Betriebsmodus zu sein.

2. Spannungsquellenwandler (30, 130, 330) nach einem der vorstehenden Ansprüche, wobei die Steuereinheit 62) programmiert ist, das Schalten der Schaltelemente der Phasenelemente (44) zu steuern, um jedes Phasenelement (44) zu steuern, zwischen dem ersten und dem zweiten Betriebsmodus umzuschalten, sodass in Verwendung eine Nettoänderung an Energie, die in der oder jeder Energiespeichervorrichtung jedes Teilschenkels (40, 42) gespeichert wird, gesteuert wird, null oder im Wesentlichen null zu sein.

3. Spannungsquellenwandler (30, 130, 330) nach einem der vorstehenden Ansprüche, wobei die Steuereinheit (62) programmiert ist, das Schalten der Schaltelemente der Phasenelemente (44) zu steuern, um jedes Phasenelement (44) zu steuern, zwischen dem ersten und dem zweiten Betriebsmodus einmalig oder einige Male über einen Leistungsfrequenzzyklus der Wechselspannungswellenform bei dem WS-Phasenanschluss (36) umzuschalten.

4. Spannungsquellenwandler (30, 130, 330) nach einem der vorstehenden Ansprüche, wobei die Steuereinheit (62) programmiert ist, das Schalten der Schaltelemente der Phasenelemente (44) zu steuern, um jedes Phasenelement (44) zu steuern, zwischen dem ersten und dem zweiten Betriebsmodus bei einem Nulldurchgangspunkt der Wechselspannungswellenform bei dem WS-Phasenanschluss (36) umzuschalten.

5. Spannungsquellenwandler (30, 130, 330) nach einem der vorstehenden Ansprüche, wobei die Steuereinheit (62) programmiert ist, das Schalten der Schaltelemente der Phasenelemente (44) zu steuern, um jedes Phasenelement (44) zu steuern, zwischen dem ersten und dem zweiten Betriebsmodus in Reaktion auf einen WS-Fehler in dem WS-Netzwerk (54) umzuschalten.

6. Spannungsquellenwandler (30, 130, 330) nach einem der vorstehenden Ansprüche, wobei die Teilschenkel (40, 42) des Schenkels (38) in Reihe zwischen dem ersten und dem zweiten GS-Anschluss (32, 34) verbunden sind.

7. Spannungsquellenwandler (30, 130, 330) nach einem der vorstehenden Ansprüche, wobei der Schenkel (38) mindestens einen zusätzlichen Teilschenkel beinhaltet.

8. Spannungsquellenwandler (30, 130, 330) nach einem der vorstehenden Ansprüche, wobei jeder Teilschenkel (40, 42) einen ersten Teilwandler (46) beinhaltet, der konfiguriert ist steuerbar zu sein, als ein Wellenformsynthesizer zu agieren, um eine erste Gleichspannung zu modifizieren, die bei dem GS-Netzwerk (54) vorliegt, wobei der erste Teilwandler (46) jedes Teilschenkels (40, 42) mindestens eine Energiespeichervorrichtung beinhaltet.

9. Spannungsquellenwandler (30, 130, 330) nach einem der vorstehenden Ansprüche, wobei jeder Teilschenkel (40, 42) einen zweiten Teilwandler (88) mit dem Phasenelement (44) in einem elektrischen Block verbunden beinhaltet, der erste Teilwandler (46) parallel mit dem elektrischen Block verbunden ist, der zweite Teilwandler (88) konfiguriert ist steuerbar zu sein, um als ein Wellenformsynthesizer zu agieren, um eine zweite Gleichspannung zu modifizieren, die an der GS-Seite des Phasenelements (54) vorliegt, der zweite Teilwandler (88) mindestens eine Energiespeichervorrichtung beinhaltet.

10. Spannungsquellenwandler (30, 130, 330) nach Anspruch 8 oder Anspruch 9, wobei jeder Teilwandler (46, 88) mindestens ein Modul (56, 90) beinhaltet, das oder jedes Modul (56, 90) mindestens ein Schaltelement und mindestens eine Energiespeichervorrichtung beinhaltet, das oder jedes Schaltelement und die oder jede Energiespeichervorrichtung in dem oder jedem Modul (56, 90) angeordnet ist kombinierbar zu sein, um selektiv eine Spannungsquelle bereitzustellen.

11. Spannungsquellenwandler (30, 130, 330) nach einem der vorstehenden Ansprüche, wobei der Spannungsquellenwandler (30, 130, 330) eine Vielzahl von WS-Phasenanschlüssen (36) beinhaltet, jeder WS-Phasenanschluss (36) mit einer jeweiligen Phase eines Mehrphasen-WS-Netzwerks (54) verbunden werden kann und der Spannungsquellenwandler (30, 130, 330) weiter eine Vielzahl von Schenkeln (38) zwischen dem ersten und dem zweiten GS-Anschluss (32, 34) verbunden beinhaltet, wobei die WS-Anschlüsse (48) der Phasenelemente (44) jedes Schenkels (38) betriebsfähig mit einem jeweiligen der WS-Phasenanschlüsse (36) verbunden sind.

12. Spannungsquellenwandler (30, 130, 330) nach Anspruch 11, wobei die Schenkel (38) in Reihe zwischen dem ersten und dem zweiten GS-Anschluss (32, 34) verbunden sind.

13. Spannungsquellenwandler (230) nach einem der Ansprüche 1 bis 12, umfassend erste und zweite GS-Anschlüsse (32, 34) zur Verbindung mit einem GS-Netzwerk (58), wobei der Spannungsquellenwandler (230) weiter einen WS-Phasenanschluss (36) zur Verbindung mit einer Phase eines WS-Netzwerks (54) umfasst, der Spannungsquellenwandler (230) erste und zweite Schenkel (38) zwischen dem ersten und dem zweiten GS-Anschluss (32, 34) verbunden beinhaltet, jeder Schenkel (38) mindestens ein Phasenelement (44) beinhaltet, jedes Phasenelement (44) eine Vielzahl von Schaltelementen und mindestens einen WS-Anschluss beinhaltet, die Vielzahl von Schaltelementen jedes Phasenelements (44) konfiguriert ist selektiv schaltbar zu sein, um selektiv eine GS-seitige Spannung an einer GS-Seite des Phasenelements (44) und eine WS-seitige Spannung an einer WS-Seite des Phasenelements (44) zu verbinden, jeder Schenkel (38) weiter einen ersten Teilwandler (46) an der GS-Seite des oder jedes Phasenelements (44) verbunden beinhaltet, jeder erste Teilwandler (46) konfiguriert ist steuerbar zu sein, um als ein Wellenformsynthesizer zu agieren, um eine erste GS-Spannung zu modifizieren, die bei dem GS-Netzwerk (58) vorliegt, jeder erste Teilwandler (46) mindestens eine Energiespeichervorrichtung beinhaltet, wobei der Spannungsquellenwandler (230) weiter erste und zweite Transformatorbaugruppen (98, 100) beinhaltet, die erste Transformatorbaugruppe (98) angeordnet ist, den oder jeden WS-Anschluss (48) des oder jedes Phasenelements (44) des ersten Schenkels (38) mit dem WS-Phasenanschluss (36) betriebsfähig zu verbinden, die zweite Transformatorbaugruppe (100) angeordnet ist, den oder jeden WS-Anschluss (48) des oder jedes Phasenelements (44) des zweiten Schenkels (38) mit dem WS-Phasenanschluss (36) betriebsfähig zu verbinden, die erste und die zweite Transformatorbaugruppe (98, 100) derart konfiguriert sind, dass in Verwendung eine Wechselspannungswellenform bei dem oder jedem WS-Anschluss (48) des oder jedes Phasenelements (44) des ersten Schenkels (38) relativ zu einer Wechselspannungswellenform bei dem oder jedem WS-Anschluss (48) des oder jedes Phasenelements (44) des zweiten Schenkels (38) phasenverschoben ist.

14. Spannungsquellenwandler (330) nach einem der Ansprüche 1 bis 13, umfassend erste und zweite GS-Anschlüsse (32, 34) zur Verbindung mit einem GS-Netzwerks (58), wobei der Spannungsquellenwandler (330) weiter einen WS-Phasenanschluss (36) zur Verbindung mit einer Phase eines WS-Netzwerks (54) umfasst, der Spannungsquellenwandler (330) erste und zweite Schenkel (38) beinhaltet, die zwischen dem ersten und dem zweiten GS-Anschluss (32, 34) verbunden sind, jeder Schenkel (38) erste und zweite Teilschenkel (40, 42) zwischen dem ersten und dem zweiten GS-Anschluss (32, 34) verbunden beinhaltet, jeder Teilschenkel (40, 42) ein Phasenelement (44) beinhaltet, jedes Phasenelement (44) eine Vielzahl von Schaltelementen und mindestens einen WS-Anschluss beinhaltet, die Vielzahl von Schaltelementen jedes Phasenelements (44) konfiguriert ist schaltbar zu sein, um selektiv eine GS-seitige Spannung an einer GS-Seite des Phasenelements (44) und eine WS-seitige Spannung an einer WS-Seite des Phasenelements (44) zu verbinden, jeder Teilschenkel (40, 42) weiter mindestens eine Energiespeichervorrichtung an der GS-Seite des Phasenelements (44) verbunden beinhaltet, wobei der Spannungsquellenwandler (330) weiter erste und zweite Transformatorbaugruppen (102, 104) beinhaltet, die erste Transformatorbaugruppe (102) angeordnet ist, den oder jeden WS-Anschluss (48) jedes Phasenelements (44) des ersten Schenkels (38) mit dem WS-Phasenanschluss (36) betriebsfähig zu verbinden, die zweite Transformatorbaugruppe (104) angeordnet ist, den oder jeden WS-Anschluss (48) jedes Phasenelements (44) des zweiten Schenkels (38) mit dem WS-Phasenanschluss (36) betriebsfähig zu verbinden, die erste und die zweite Transformatorbaugruppe (102, 104) derart konfiguriert sind, dass in Verwendung eine Wechselspannungswellenform bei dem oder jedem WS-Anschluss (48) jedes Phasenelements (44) des ersten Schenkels (38) relativ zu einer Wechselspannungswellenform bei dem oder jedem WS-Anschluss (48) jedes Phasenelements (44) des zweiten Schenkels (38) phasenverschoben ist, wobei der Spannungsquellenwandler (330) weiter eine Steuereinheit (62) beinhaltet, die programmiert ist, das Schalten des Schaltelements der Phasenelemente (44) zu steuern, um jedes Phasenelement (44) zu steuern, die Konfiguration einer Wechselspannungswellenform bei dem oder jedem entsprechenden WS-Anschluss (48) derart zu steuern, dass in Verwendung eine Wechselspannungswellenform bei dem oder jedem WS-Anschluss (48) des Phasenelements (44) jedes ersten Teilschenkels (40) relativ zu der Wechselspannungswellenform bei dem WS-Phasenanschluss (36) eine positive Phasenverschiebung aufweist, und eine Wechselspannungswellenform bei dem oder jedem WS-Anschluss (48) des Phasenelements (44) jedes zweiten Teilschenkels (42) relativ zu der Wechselspannungswellenform bei dem WS-Phasenanschluss (36) eine negative Phasenverschiebung aufweist.

## Revendications

1. Convertisseur de source de tension (30, 130, 330) comprenant des première et seconde bornes CC (32, 34) pour une connexion à un réseau CC (54), le convertisseur de source de tension (30, 130, 330) comprenant en outre une borne de phase CA (36) pour une connexion à une phase d'un réseau CA (54), le convertisseur de source de tension (30, 130, 330) incluant un membre (38) connecté entre les première et seconde bornes CC (32, 34), le membre (38) incluant des premier et second sous-membres (40, 42) connectés entre les première et seconde bornes CC (32, 34), chaque sous-membre (40, 42) incluant un élément de phase (44), chaque élément de phase (44) incluant une pluralité d'éléments de commutation et au moins une borne CA (48), la ou chaque borne CA (48) de chaque élément de phase (44) étant connectée de manière opérationnelle à la borne de phase CA (36) de telle sorte qu'une forme d'onde de tension CA au niveau de la borne de phase CA (36) est la somme vectorielle des formes d'onde de tension CA au niveau des bornes CA (48) des éléments de phase (44) des premier et second sous-membres (40, 42), la pluralité d'éléments de commutation de chaque élément de phase (44) étant configurés pour pouvoir être commutés afin d'interconnecter sélectivement une tension côté CC (84, 94, 96) au niveau d'un côté CC de l'élément de phase (44) et une tension côté CA (86) au niveau d'un côté CA de l'élément de phase (44), chaque sous-membre (40, 42) incluant en outre au moins un dispositif de stockage d'énergie connecté au niveau du côté CC de l'élément de phase (44), dans lequel le convertisseur de source de tension (30, 130, 330) inclut en outre un dispositif de commande (62) programmé pour commander la commutation des éléments de commutation des éléments de phase (44) de manière à commander chaque élément de phase (44) pour commuter alternativement entre : un premier mode de fonctionnement pour commander la configuration d'une forme d'onde de tension CA au niveau de la ou de chaque borne CA correspondante (48) pour avoir un déphasage positif par rapport à la forme d'onde de tension CA au niveau de la borne de phase CA (36) ; et un second mode de fonctionnement pour commander la configuration d'une forme d'onde de tension CA au niveau de la ou de chaque borne CA correspondante (48) pour avoir un déphasage négatif par rapport à la forme d'onde de tension CA au niveau de la borne de phase CA (36),
dans lequel le dispositif de commande (62) est programmé pour commander la commutation des éléments de commutation des éléments de phase (44) de sorte qu'en utilisation, tandis que chaque élément de phase (44) est commandé pour commuter entre les premier et second modes de fonctionnement, un des éléments de phase (44) des premier et second sous-membres (40, 42) est commandé pour être dans l'un des premier et second modes de fonctionnement tandis que l'autre des éléments de phase (44) des premier et second sous-membres (40, 42) est commandé pour être dans l'autre des premier et second modes de fonctionnement.

2. Convertisseur de source de tension (30, 130, 330) selon l'une quelconque des revendications précédentes, dans lequel le dispositif de commande (62) est programmé pour commander la commutation des éléments de commutation des éléments de phase (44) de manière à commander chaque élément de phase (44) pour commuter entre les premier et second modes de fonctionnement de sorte qu'en utilisation, un changement net d'énergie stockée dans le ou chaque dispositif de stockage d'énergie de chaque sous-membre (40, 42) est commandé pour être nul ou sensiblement nul.

3. Convertisseur de source de tension (30, 130, 330) selon l'une quelconque des revendications précédentes, dans lequel le dispositif de commande (62) est programmé pour commander la commutation des éléments de commutation des éléments de phase (44) de manière à commander chaque élément de phase (44) pour commuter entre les premier et second modes de fonctionnement une seule fois ou plusieurs fois sur un cycle de fréquence de puissance de la forme d'onde de tension CA au niveau de la borne de phase CA (36).

4. Convertisseur de source de tension (30, 130, 330) selon l'une quelconque des revendications précédentes, dans lequel le dispositif de commande (62) est programmé pour commander la commutation des éléments de commutation des éléments de phase (44) de manière à commander chaque élément de phase (44) pour commuter entre les premier et second modes de fonctionnement à un point de passage par zéro de la forme d'onde de tension CA au niveau de la borne de phase CA (36).

5. Convertisseur de source de tension (30, 130, 330) selon l'une quelconque des revendications précédentes, dans lequel le dispositif de commande (62) est programmé pour commander la commutation des éléments de commutation des éléments de phase (44) de manière à commander chaque élément de phase (44) pour commuter entre les premier et second modes de fonctionnement en réponse à un défaut CA dans le réseau CA (54).

6. Convertisseur de source de tension (30, 130, 330) selon l'une quelconque des revendications précédentes, dans lequel les sous-membres (40, 42) du membre (38) sont connectées en série entre les première et seconde bornes CC (32, 34).

7. Convertisseur de source de tension (30, 130, 330) selon l'une quelconque des revendications précédentes, dans lequel le membre (38) inclut au moins un sous-membre supplémentaire.

8. Convertisseur de source de tension (30, 130, 330) selon l'une quelconque des revendications précédentes, dans lequel chaque sous-membre (40, 42) inclut un premier sous-convertisseur (46) configuré pour pouvoir être commandé pour agir comme un synthétiseur de forme d'onde afin de modifier une première tension continue présentée au réseau CC (54), le premier sous-convertisseur (46) de chaque sous-membre (40, 42) incluant au moins un dispositif de stockage d'énergie.

9. Convertisseur de source de tension (130, 330) selon l'une quelconque des revendications précédentes, dans lequel chaque sous-membre (40, 42) inclut un second sous-convertisseur (88) connecté à l'élément de phase (44) dans un bloc électrique, le premier sous-convertisseur (46) connecté en parallèle avec le bloc électrique, le second sous-convertisseur (88) étant configuré pour pouvoir être commandé pour agir en tant que synthétiseur de forme d'onde afin de modifier une seconde tension CC présentée au côté CC de l'élément de phase (54), le second sous-convertisseur (88) comprenant au moins un dispositif de stockage d'énergie.

10. Convertisseur de source de tension (30, 130, 330) selon la revendication 8 ou la revendication 9, dans lequel chaque sous-convertisseur (46, 88) inclut au moins un module (56, 90), le ou chaque module (56, 90) incluant au moins un élément de commutation et au moins un dispositif de stockage d'énergie, le ou chaque élément de commutation et le ou chaque dispositif de stockage d'énergie dans le ou chaque module (56, 90) agencés pour pouvoir être combinés pour fournir sélectivement une source de tension.

11. Convertisseur de source de tension (30, 130, 330) selon l'une quelconque des revendications précédentes, dans lequel le convertisseur de source de tension (30, 130, 330) inclut une pluralité de bornes de phase CA (36), chaque borne de phase CA (36) pouvant être connectée à une phase respective d'un réseau CA multiphase (54), et le convertisseur de source de tension (30, 130, 330) inclut en outre une pluralité de membres (38) connectés entre les première et seconde bornes CC (32, 34), les bornes CA (48) des éléments de phase (44) de chaque membre (38) étant connectées de manière opérationnelle à l'une respective des bornes de phase CA (36).

12. Convertisseur de source de tension (30, 130, 330) selon la revendication 11, dans lequel les membres (38) sont connectées en série entre les première et seconde bornes CC (32, 34).

13. Convertisseur de source de tension (230) selon l'une quelconque des revendications 1 à 12, comprenant des première et seconde bornes CC (32, 34) pour une connexion à un réseau CC (58), le convertisseur de source de tension (230) comprenant en outre une borne de phase CA (36) pour une connexion à une phase d'un réseau CA (54), le convertisseur de source de tension (230) incluant des premier et second membres (38) connectés entre les première et seconde bornes CC (32, 34), chaque membre (38) incluant au moins un élément de phase (44), chaque élément de phase (44) incluant une pluralité d'éléments de commutation et au moins une borne CA, la pluralité d'éléments de commutation de chaque élément de phase (44) étant configurés pour pouvoir être commutés afin d'interconnecter sélectivement une tension côté CC au niveau d'un côté CC de l'élément de phase (44) et une tension côté CA au niveau d'un côté CA de l'élément de phase (44), chaque membre (38) incluant en outre un premier sous-convertisseur (46) connecté au niveau du côté CC du ou de chaque élément de phase (44), chaque premier sous-convertisseur (46) étant configuré pour pouvoir être commandé pour agir comme un synthétiseur de forme d'onde afin de modifier une première tension CC présentée au réseau CC (58), chaque premier sous-convertisseur (46) incluant au moins un dispositif de stockage d'énergie, dans lequel le convertisseur de source de tension (230) inclut en outre des premier et second ensembles de transformateur (98, 100), le premier ensemble de transformateur (98) agencé pour connecter de manière opérationnelle la ou chaque borne CA (48) du ou de chaque élément de phase (44) du premier membre (38) à la borne de phase CA (36), le second ensemble de transformateur (100) étant agencé pour connecter de manière opérationnelle la ou chaque borne CA (48) du ou de chaque élément de phase (44) du second membre (38) à la borne de phase CA (36), les premier et second ensembles de transformateur (98, 100) étant configurés de telle sorte qu'en utilisation, une forme d'onde de tension CA au niveau de la ou de chaque borne CA (48) du ou de chaque élément de phase (44) du premier membre (38) est déphasée par rapport à une forme d'onde de tension CA au niveau de la ou de chaque borne CA (48) du ou de chaque élément de phase (44) du second membre (38).

14. Convertisseur de source de tension (330) selon l'une quelconque des revendications 1 à 13, comprenant des première et seconde bornes CC (32, 34) pour une connexion à un réseau CC (58), le convertisseur de source de tension (330) comprenant en outre une borne de phase CA (36) pour une connexion à une phase d'un réseau CA (54), le convertisseur de source de tension (330) incluant des premier et second membres (38) connectés entre les première et seconde bornes CC (32, 34), chaque membre (38) incluant des premier et second sous-membres (40, 42) connectés entre les première et seconde bornes CC (32, 34), chaque sous-membre (40, 42) incluant un élément de phase (44), chaque élément de phase (44) incluant une pluralité d'éléments de commutation et au moins une borne CA, la pluralité d'éléments de commutation de chaque élément de phase (44) configuré pour pouvoir être commuté afin d'interconnecter sélectivement une tension côté CC au niveau d'un côté CC de l'élément de phase (44) et une tension côté CA au niveau d'un côté CA de l'élément de phase (44), chaque sous-membre (40, 42) incluant en outre au moins un dispositif de stockage d'énergie connecté au niveau du côté CC de l'élément de phase (44), dans lequel le convertisseur de source de tension (330) inclut en outre des premier et second ensembles de transformateur (102, 104), le premier ensemble de transformateur (102) agencé pour connecter de manière opérationnelle la ou chaque borne CA (48) de chaque élément de phase (44) du premier membre (38) à la borne de phase CA (36), le second ensemble de transformateur (104) agencé pour connecter de manière opérationnelle la ou chaque borne CA (48) de chaque élément de phase (44) du second membre (38) à la borne de phase CA (36), les premier et second ensembles de transformateur (102, 104) configurés de telle sorte qu'en utilisation, une forme d'onde de tension CA au niveau de la ou de chaque borne CA (48) de chaque élément de phase (44) du premier membre (38) est déphasée par rapport à une forme d'onde de tension CA au niveau de la ou de chaque borne CA (48) de chaque élément de phase (44) du second membre (38), dans lequel le convertisseur de source de tension (330) inclut en outre un dispositif de commande (62) programmé pour commander la commutation des éléments de commutation des éléments de phase (44) de manière à commander chaque élément de phase (44) pour commander la configuration d'une forme d'onde de tension CA au niveau de la ou de chaque borne CA correspondante (48) de sorte qu'en utilisation, une forme d'onde de tension CA au niveau de la ou de chaque borne CA (48) de l'élément de phase (44) de chaque premier sous-membre (40) présente un déphasage positif par rapport à la forme d'onde de tension CA au niveau de la borne de phase CA (36), et une forme d'onde de tension CA au niveau de la ou de chaque borne CA (48) de l'élément de phase (44) de chaque second sous-membre (42) présente un déphasage négatif par rapport à la forme d'onde de tension CA au niveau de la borne de phase CA (36).
